# EUROPEAN PATENT SPECIFICATION

(11) **EP 2 659 370 B1**
(45) Date of publication and mention of the grant of the patent: **18.02.2015**
(21) Application number: 11813634.0
(22) Date of filing: 28.12.2011
(51) Int. Cl.: G06F 11/14

(54) **METHOD AND SYSTEM FOR RECOVERING A DATABASE**
VERFAHREN UND SYSTEM ZUR DATENBANKWIEDERHERSTELLUNG
PROCÉDÉ ET SYSTÈME POUR LE RECOUVREMENT DE BANQUE DE DONNÉES

(30) Priority: 30.12.2010 US 982041
(43) Date of publication of application: 06.11.2013
(73) Proprietor: Verisign, Inc., Reston, VA 20190 (US)
(72) Inventor: GOULD, James, Fred, Reston, Virginia 20190 (US); GRIFFITHS, Hui Xu, Reston, Virginia 20190 (US)
(74) Representative: Benson, Christopher
(86) International application number: PCT/US2011/067500
(87) International publication number: WO 2012/092325

(56) References cited:
- US-A1- 2009 125 563
- US-A1- 2009 157 764
- US-A1- 2010 145 909

## Description

This application claims priority to U.S. Patent Application No. 12/982,041, filed on December 30, 2010.

### BACKGROUND OF THE INVENTION

The Domain Name System (DNS) is the part of the Internet infrastructure that translates human-readable domain names into the Internet Protocol (IP) numbers needed to establish TCP/IP communications over the Internet. That is, DNS allows users to refer to web sites, and other resources, using easier to remember domain names, such as "www.en.example.com," rather than the numeric IP addresses, such as "123.4.56.78;" which are machine readable addresses used by software to communicate with computers on the Internet. Each domain name is made up of a series of character strings (labels) separated by dots. The right-most label in a domain name is known as the "top-level domain" (TLD). Examples of well-known TLDs are ".com"; ".net"; ".org." etc. Each TLD supports second-level domains, listed immediately to the left of the TLD, e.g., "example" in "www.example.com." Each second-level domain can include a number of third-level domains located immediately to the left of the second-level domain, e.g., "en" in "www.en.example.com." There can be additional level domains as well, with virtually no limitation. For example, a domain with additional domain levels could be "www.landscape.photos.example.com."

It should be noted that a single IP address, e.g., a single server, can support numerous domain names. That is, different domain names may resolve to the same server, that can then determine what content to provide based on the requested domain name and/or additional non-domain information. This is sometimes referred to as virtual hosting.

Additional non-domain information may be included in a Uniform Resource Identifier ("URI") structure that includes the domain name. For example, a "path" part is a sequence of segments separated by a forward slash ("/"). This information may be included immediately to the right of the domain name, such as the "blog " in "www.example.com/blog/today.htm," and may be used by a server or other receiving device to identify and deliver specific content or run particular code. Other examples of non-domain information may include queries and fragments, the specifics of which are understood by those of ordinary skill in the art and are not discussed in detail herein. Combinations of this information may be included in web page hyperlinks that navigate a user to another section of the same page or to another web page.

The Internet Corporation for Assigned Names and Numbers ("ICANN") is responsible for managing the assignment of domain names and IP addresses. The responsibility for operating each TLD is delegated by ICANN to an organization known as a domain name registry operator, ("registry"). For example, VeriSign, Inc. is the registry operator for the .com TLD. Each registry operator maintains a registry database of all domain names registered in a top-level domain for which it is responsible. A registry database record can map a domain name to an IP address of a name server. When a domain name query is submitted to the registry, the registry returns the IP address of the name server, which can contain another record with further address information about the Internet resource that corresponds to the queried domain name. The process of responding to a domain name query with an IP address is called "resolving" the domain name.

The actual registration of domain names is performed by companies referred to as domain name registrars ("registrars"). Registrars register domain names with registries. For example, an end user submits to a registrar a domain name for registration and provides an IP address to which the domain name should resolve. The registrar communicates with the registry to create a registry database record that can be used to resolve the domain name to the IP address provided by the end user and indicates the identity of the registrar through which the domain name was registered. Except for the expiration of the domain name registration at the registry, only the registrar designated in the domain name record at the registry can modify or delete registry database information about a domain name. An end user can switch registrars by following certain domain transfer procedures.

As new generic TLDs are introduced, there is a need in the art for improved methods and system related to establishing and operating such registries.

Document US 2010/145909 A1 discloses a method of recovering a database, the method comprising:
- providing a computer having a processor;
- providing a backup database including a last change marker;
- extracting, using the processor, the last change marker from the backup database;
- providing transaction logs, wherein each transaction of the transaction logs includes input data, processed data, and a change marker;
- sorting, using the processor, the transactions of the transaction logs using the change markers;
- replaying, using the processor, one or more of the transactions of the transaction logs and
- generating a recovered database.

### SUMMARY OF THE INVENTION

The present invention relates generally to computer networks. More specifically, the present invention relates to methods and systems for implementing business rules in a registry. Merely by way of example, the invention has been applied to a system that implements business logic as a package that can be reused in multiple environments and for multiple TLDs. The methods and techniques can be applied to other computer networks and database systems.

According to an embodiment of the present invention, there is provided a method of recovering a database, the method comprising the steps of: after the database becomes unavailable, extracting, using a processor, a last change marker from a backup database; copying, using the processor, transaction logs from a plurality of application servers; creating, using the processor, a transaction log database including the copied transaction logs, wherein each transaction in the transaction log database including the copied transaction logs includes input data, processed data, a timestamp corresponding to a transaction log time, and a change marker that reflects an order of transactions of the copied transaction logs; identifying, using a sorting and filter molecule, one or more transactions in the transaction log database including the copied transaction logs that have change markers that follow the last change marker; executing, using a replay module, the one or more transactions that were identified; and generating a recovered database including the one or more transactions that were executed..

According to another embodiment of the present invention, a method of forming a transaction log is provided. The method includes providing a computer having a processor and receiving one or more client inputs including a request. The method also includes processing, using the processor, the request using the processor to provide processed data and merging, using the processor, at least one of the one or more client inputs and the processed data. The method further includes determining that the merged one or more client inputs and processed data is to be committed and creating, using the processor, a transaction log entry using the merged one or more client inputs and processed data. Additionally, the method includes storing the transaction log entry in the transaction log and storing a change marker associated with the transaction log entry in the transaction log.

According to a specific embodiment of the present invention, there is provided a database recovery system comprising: an input/output module; a processor coupled to the input/output module; a backup database coupled to the processor, wherein the backup database includes a last change marker; wherein the system further comprises: a database of transaction logs, wherein each transaction of the transaction logs includes input data, processed data, a timestamp corresponding to a transaction log time, and a change marker that reflects an order of transactions of the one or more transaction logs; a sorting and filter module coupled to the database of transaction logs and operable to identify one or more transactions in the database of transaction logs that have change markers that follow the last change marker; a replay module operable to execute the one or more transactions that were identified; and a recovered database including the one or more transactions that were executed

Many benefits are achieved by way of the present invention over conventional techniques. For example, embodiments of the present invention provide methods to create transaction logs with change markers and to recover databases by replaying transactions. These and other embodiments of the invention along with many of its advantages and features are described in more detail in conjunction with the text below and attached figures.

### BRIEF DESCRIPTION OF THE DRAWINGS

FIG. 1 is a diagram illustrating a high level architecture for a business logic system according to an embodiment of the present invention;
FIG. 2A is a simplified chart illustrating functional components of a business logic system according to an embodiment of the present invention;
FIG. 2B is a simplified schematic diagram illustrating a business logic system according to an embodiment of the present invention;
FIG. 3 is a simplified flowchart illustrating operation of a spring container according to an embodiment of the present invention;
FIG. 4 is simplified schematic diagram illustrating an operations implementation according to an embodiment of the present invention;
FIG. 5 is simplified sequence diagram illustrating an operation according to an embodiment of the present invention;
FIG. 6A is simplified flowchart illustrating a method of creating a transaction log according to an embodiment of the present invention;
FIG. 6B is a simplified flowchart illustrating a method of replaying transactions to recover a database according to an embodiment of the present invention;
FIG. 7 is a simplified schematic diagram illustrating a class diagram according to an embodiment of the present invention;
FIG. 8 is a simplified schematic diagram illustrating access to Data Access Objects according to an embodiment of the present invention; and
FIG. 9 is a simplified schematic diagram illustrating an overall class diagram according to an embodiment of the present invention.

### DETAILED DESCRIPTION OF THE INVENTION

Embodiments of the present invention are related to a set of design and technology concepts that are applicable to implementing a business logic framework, for example, in the context of a registry. In addition to applicability to the .com and .net registries, embodiments of the present invention are applicable to other registries and database systems.

Embodiments of the present invention provide a number of benefits not available using conventional techniques:
- Truly unit-testable
- Readable and maintainable
- Congruent with accepted design best practices
- Congruent with accepted implementation best practices
- Reusable as a code base for any Registry
- Pluggable in terms of its implementation layers
- Robust enough to last a decade

Embodiments of the present invention provide a Next Generation Business Logic Framework design that incorporates concepts such as Inversion of Control (IoC) and Dependency Injection (DI) to provide a formalized means of composing and orchestrating services and building blocks in a fully working application. The Aspect Oriented Programming (AOP) approach utilized herein promotes modularization and aids in separation of concerns, specifically crosscutting concerns such as security, transaction management, and re-player functionality, thus rendering the code more readable and maintainable. The overall design described herein is based on a multi-layer architecture providing a model for a flexible and reusable code base. As described below, the main layers include the crosscutting aspects, the operation, and the data access layer.

The architecture described herein provides a number of benefits.

Testability, which provides the ability to validate the stability of the code base in the long term, ensuring that it always functions as designed. It is possible to make a distinction between unit tests and functional (or acceptance) tests: the first type gives confidence to the developers in the code; the second type gives confidence to the customer or QA in the application as a whole. Junit-based integration tests (tests involving more than one class or layer) are implemented and embodiments run the existing Core ProtocolScripting tests (augmented to compare database interactions between old code and our new code), as well as new test scripts. Using unit testing frameworks, it is possible to write test cases covering the whole extent of the core system.

One of the main benefits of unit testing appears when re-factoring comes into play. Having complete unit testing suites, run regularly (in a continuous integration approach), ensures that new or re-factored code brought into the code base is tested against failures and side effects. Problems can be spotted and fixed in shorter cycles. Unit test cases can be written horizontally on a layer by layer, class by class, method by method basis. Only public methods are tested in some implementations. Since private methods are called by the public ones, they are de facto integrated in the unit tests.

Ensuring that application layers are testable independently enforces loose-coupling and reusability. The same holds for unit testing classes in that exercising a class in isolation - using mocks for its dependencies - ensures that the class behaves as expected under all conditions and in whatever couplings it experiences in the running application. Typically, the JUnit 4.x framework is used for unit testing.

Embodiments of the present invention implement best practices related to unit testing, including:
- Unit tests should be independent from one another. Therefore unit tests should not rely on a specific execution order.
- Unit tests should be as fast as possible so developers will actually run all of them.
- Unit tests are part of the documentation and therefore should be readable and should show the intent of the code.

Embodiments of the present invention implement best practices including separation of concerns and loose coupling between the various components. As such, components are accessible through specific interfaces and do not let out any information about their implementation (encapsulation) in some embodiments. Each component is designed to be in charge of some precise aspects and not provide an all-in-one functionality. Separation of concerns helps to define clear contracts between components and promotes horizontal testability.

Although embodiments of the present invention are well suited for use with the COM/NET registry, the present invention is not limited to use with these registries and provide a platform for other registries as well. The framework described herein is thus applicable to COM/NET, other Domain Registries, and for building other provisioning systems.

Embodiments of the present invention allow for the easy pluggability of new implementations of and within layers through the dependencies on interfaces and the use of an IoC container that can inject concrete dependencies into the framework. An example of using pluggable layers is the data access object (DAO) layer, which could be implemented as an Oracle stored procedure based DAO, a Hermes stored procedure based DAO, or a Java Persistence API (JPA) DAO. Each concrete DAO implementation can be injected via configuration and be done without having to change any of the other software layers.

Implementations described herein provide business logic that is OSGI-ready, primarily through the jar manifests. This is accomplished through the selection of an OSGI container for the business-logic consumers (e.g., app servers) that take advantage of these capabilities.

### High Level Architecture and Components

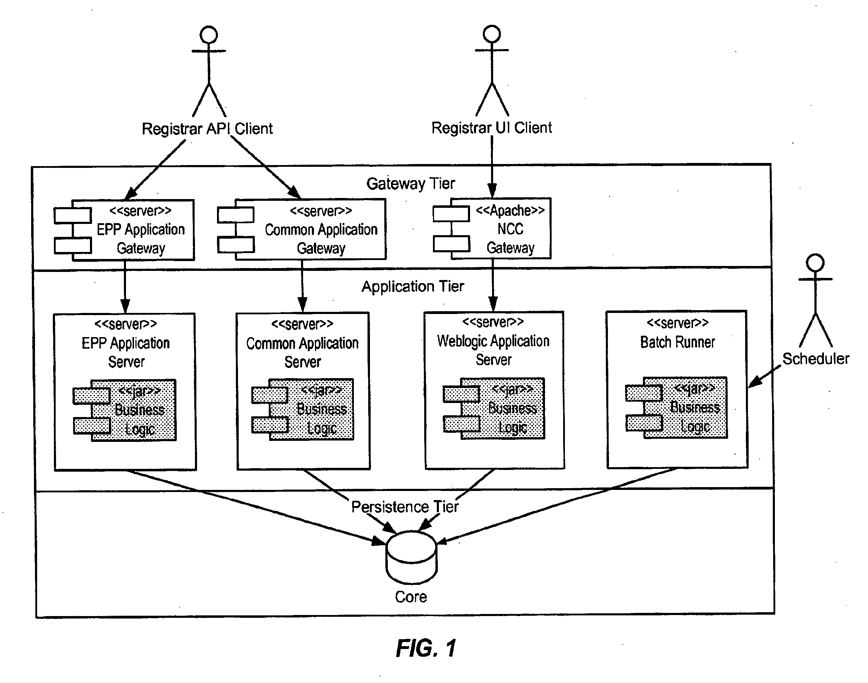

The core business logic is packaged as a library that can be reused in multiple environments and for multiple TLDs. FIG. 1 is a diagram illustrating a high level architecture for a business logic system according to an embodiment of the present invention. As illustrated in FIG. 1, clients interact through the Gateway Tier with the Application Tier including various application servers.

Embodiments of the present invention are based on several components related to:
- Error management - shielding clients from unchecked exceptions
- Security - for the authorization purpose
- Re-playability - a serialization of re-playable data
- Transaction management
- Operation execution , to include
   o Pluggable validation
   o A business rule engine (BRE) - in charge of executing pre- and post-operation logic
   o Business entities
- Data access - a DAO implementation for interfacing with persistent storage

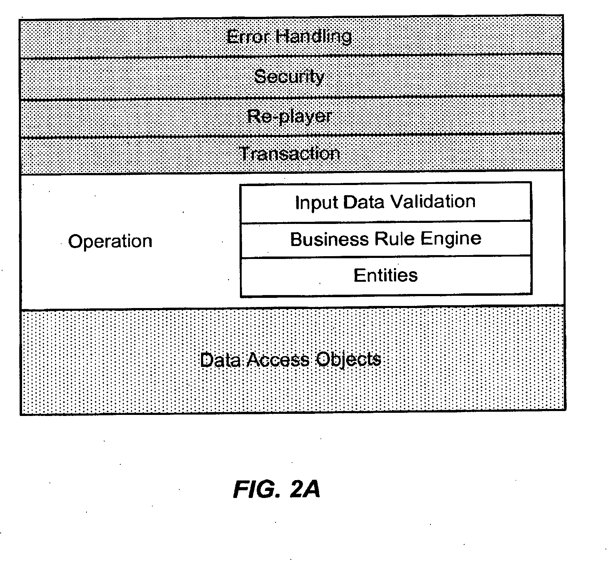

FIG. 2A is a simplified chart illustrating functional components of a business logic system according to an embodiment of the present invention. The various components illustrated in FIG. 2A are described in detail in the following description.

### Error Handling

Exception handling and logging, also referred to as error handling, are activities that are supported by technical components to help ensure their proper and coherent usage throughout the development and maintenance period. In some implementations, SLF4J is used since it provides a flexible developer API, better performance and the largest number of supported logging systems. Embodiments of the present invention enable migration from the log4j standard to the Logback logging system. The choice of SLF4J has no implication on the client application as it is compatible with numerous logging products.

### Spring Framework

In order to facilitate testability, maintainability, and good programming practices, embodiments of the present invention use Spring (an open source platform) to facilitate loose coupling between the layers. Spring encourages positive practices by virtue of it being a configuration-driven IoC container. Additionally, Spring provides other benefits including: Comprehensive and modular; Well documented; Supported by a large and growing community; Supportive of testing; Non-intrusive; and Simple yet powerful as a programming model.

The Spring Framework includes abstraction layers for transactions, persistence frameworks, security, web application development, JDBC, messaging, remoting, validations, management, and the like. It incorporates and provides support for all emerging technologies even before they become mainstream. The core of Spring is the IoC container, and it supports both setter and constructor dependency injection at bean-instantiation time as well as full object-lifecycle management.

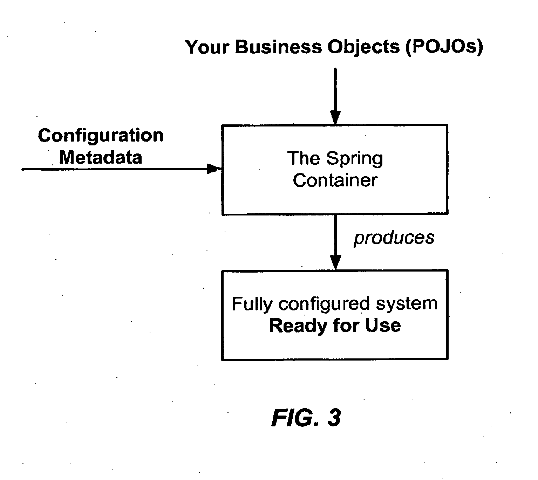

Beans defined, configured, and managed by Spring have no dependency on Spring. Spring uses regular JavaBeans and Java language constructs to inject dependencies into managed beans. Beans managed by Spring are plain old Java objects (POJOs). FIG. 3 is a simplified flowchart illustrating operation of a spring container according to an embodiment of the present invention. Spring promotes decoupling of the layers, where dependencies are provided declaratively through the configuration files and are established only at runtime.

Because Spring is an IoC container, it comes with a set of out-of-the-box features that can be utilized rather than developing custom solutions. As an example, one of the key components of Spring is its non-intrusive AOP framework. The IoC container does not depend on the AOP framework. However, the AOP framework complements the IoC container because aspects and advice can be added to and removed from application behaviors via configuration-driven dependency injection. Some embodiments use Spring's support of AspectJ (compile-time weaving) for declarative transaction management as well as for addressing other crosscutting aspects such as authorization, re-player logging, error handling, and the like.

In cases where business logic is used within JEE application where authentication is already performed with JAAS, it is advisable to use the SubjectAuthenticationToken for client authentication. As in any multilayer application, the authentication credentials of the client are not available at low levels and it is not typically practical to perform two authentications. In JEE applications, the security context (thus the Subject) is naturally available almost anywhere, so the Subject can be easily passed to the business logic's authentication providers via the same method as within the standalone applications. JAAS security context is even propagated across EJB invocations, so business logic can also be invoked on remote servers.

The SessionCreate operation is a special operation that allows clients to pre-authenticate with users credentials once, get hold of the authenticated NamingAuthenticatedToken and keep it for as long as they need. This operation also creates a session record in the database for auditing purposes.

Some of spring-security components that support the authentication and authorization process are customized or re-implemented for business logic purposes in light of specific requirements or issues related to domain registration and operation.
- NamingUser contains information about the registrar that can be loaded from the database.
- NamingAuthenticationToken contains the authentication data needed to authenticate a registrar, including the channel ID.
- PegasusPasswordEncoder is a custom password encoder that supports Pegasus encodings.
- StandardAuthenticationProvider and SubjectAuthenticationProviders are implementations of AuthenticationProvider that utilize the rest of the custom components.

The custom components and the rest of the Spring-Security infrastructure are assembled together by a Spring context file (security.xml) to form a reusable security layer. It should be noted the embodiments of the present invention are not limited to the use of Spring and other frameworks can be utilized according to alternative embodiments of the present invention.

DAO support - Spring's extensive DAO support allows for easier integration with existing data access technologies, as well as shielding clients of the DAO layer from technology specific exceptions.

Security - Spring-Security security is a powerful, flexible security solution for the enterprise. It provides comprehensive authentication, authorization, instance-based access control, channel security, and human user detection capabilities.

Annotation-driven confguration - Spring 2.5 supports @Autowired annotations as well as JSR-250 annotations.

Test frameworks support- Spring simplifies unit and integration testing by providing mocked implementations, applying DI to the tests, transaction management of the test cases, and the like.

### Inversion of Control and Dependency Injection

The concept behind Inversion of Control is that an object exposes its dependencies via some contract. The container initializes and supplies the dependencies at runtime. The dependencies are initialized by a framework that serves as the main controller. Dependencies are essentially anything that an object needs to perform its designated function without the object being concerned with the dependency's implementation. Dependency injection is a form of IoC that removes explicit dependence on container APIs and it is utilized by many lightweight IoC containers. Dependencies are injected by the framework rather than being directly instantiated by the dependent objects, thereby decoupling a component from the specific implementations of its dependencies. In a nested object graph, each object exposes its dependencies to the outer caller until the top-object is assembled. The top-object is the entry point of the system. Use of IoC would enables business logic layers to be loosely coupled by programming to the interfaces, where dependencies are provided declaratively through the configuration files.

The IoC frameworks provide the flexibility to test Java classes in isolation by injecting mock implementations. For example, it is possible to test an operation class using a mock implementation of the needed DAO class. This way, the business logic in the operation class can be tested without worrying about the persistence details of connecting to the underlying data source. Mocking dependencies also provides developers with a handy way to simulate all manner of behaviors, including unexpected behaviors to expose corner-case scenarios that would be impossible to simulate otherwise. In addition, increasing the code coverage would directly increase the confidence that a developer has while re-factoring and modifying of the business layer. Loose coupling between layers provides the flexibility to plug-in different implementations, allowing the systems to easily test and maintain the business layer.

### Operations

Operations represent a client's entry point into the business logic layer. The operations implementation described herein shares commonalities with the command design pattern. The Gang of Four description of this pattern's intent is to "encapsulate a request as an object, thereby letting you parameterize clients with different requests, queue or log requests, and support undoable operations." In order to comply with this pattern, the client configures the command and passes it to another component for execution. In the system described herein, the client configures and executes the command.

Embodiments utilize a common interface to all operations so as to simplify their usage. The user creates a concrete operation via an operation factory, populates it with relevant values, and calls its execute method. The process of a client obtaining and using an operation is described a bit later in this document.

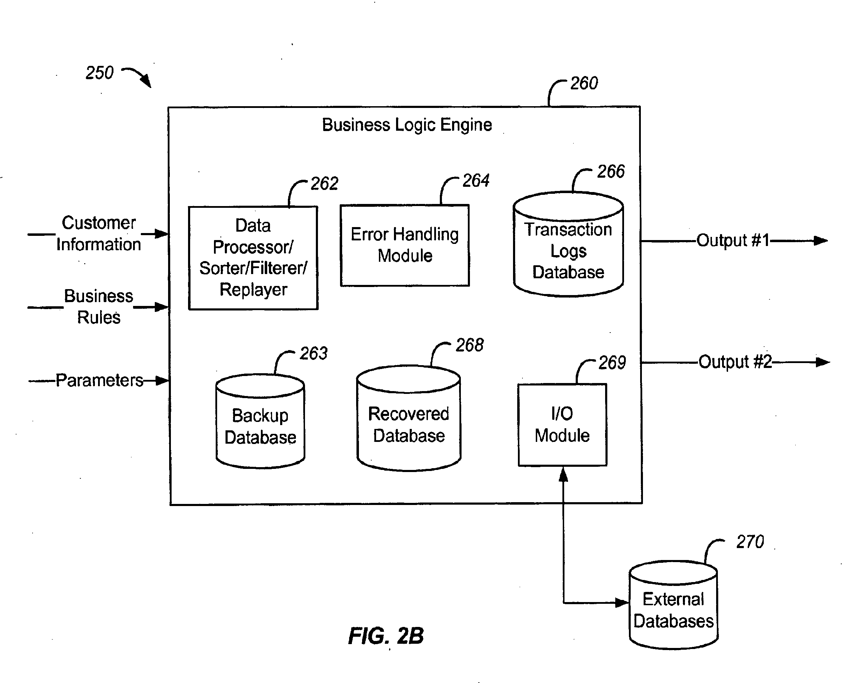

FIG. 2B is a simplified schematic diagram illustrating a business logic system 250 according to an embodiment of the present invention. Referring to FIG. 2B, one or more inputs are received by the business logic engine 260. The illustrated inputs, include customer information, which may include client inputs as discussed more fully below, and business rules. As an example, the customer information could include a request for a domain name create operation and the business rules could specify items related to creating domain names. The inputs can also include parameters including the current date and time of the request, or the like.

The business logic engine 260 receives inputs including the illustrated inputs and provides one or more outputs. The business logic engine 260 includes a data processor 262 and one or more databases. An error handling module 264 is illustrated and it utilized, for example, when requests are malformed or specify parameters outside the boundary of the given business rules. The data processor can include one or more modules in software, hardware, or combinations thereof. Such modules can include a sorting module to sort transactions and transaction logs, a filtering module to filter transactions, a replay module to replay transactions, and the like. An I/O module 269 is provide that can interact with external databases 270 as well as receive the inputs (e.g., customer information) and produce outputs. In an embodiment, the I/O module 269 is operable to implement the Extensible Provisioning Protocol (EPP) in conjunction with domain name services. The one or more databases include a backup database 263, a database of transaction logs 266, and a recovered database 668. Other databases can be provided and utilized in accordance embodiments of the present invention.

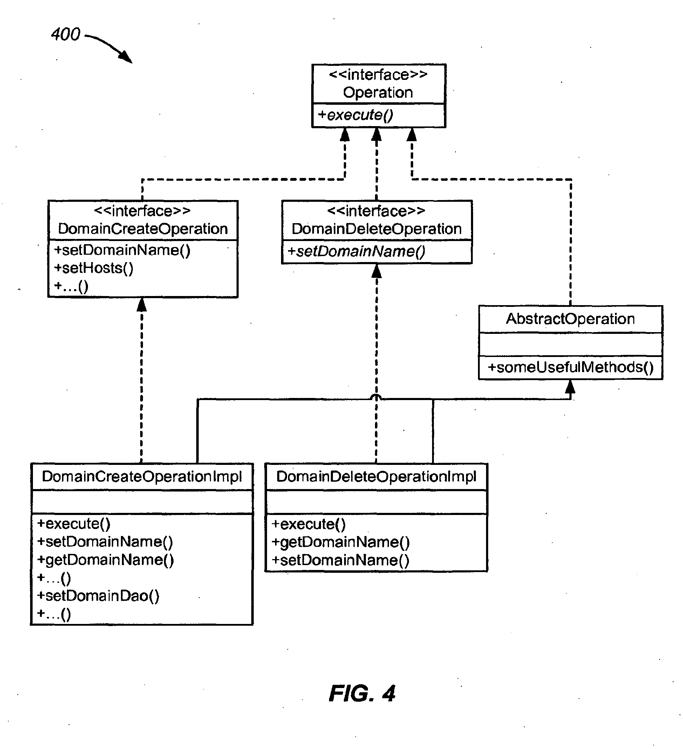

FIG. 4 is simplified schematic diagram illustrating an operations implementation according to an embodiment of the present invention. A specific business interface per operation is used in order to be able to reuse operation implementations by hiding some details for a specific client if required. Moreover, this interface hides implementation-related dependencies. An abstract class (AbstractOperation) with some template method is relevant because it helps to implement features common to all operations.

AbstractOperation implements a template pattern, in order to simplify operation implementations. It splits the execution in phases (steps):
- preExecute - creates or loads the entities
- runRules - passes the entities created earlier to the rule engine
- doExecute - business logic or manipulation of the entities

According to embodiments of the present invention, the operation implementation runs the rules before going into the business logic. In cases where the AbstractOperation is not flexible enough, the operation can implement directly the Operation interface.

### Operation Factory

The operation factory provides new pre-configured operation implementations without exposing the implementation details and dependencies. A client requests an operation instance based on an concrete operation interface (e.g., DomainCreateOperation).

In reality, the operation factory - the BusinessServices class - is only a facade to Spring's application context. When a user asks the BusinessServices class for an operation, the BusinessServices will simply request the operation type from the application context (which is the real factory). The BusinessServices (and therefore the underlying operation factory) is created and configured at start-up with provided set of context files. Thus an invoker could choose from a set of configurations and/or enable/disable features according to its needs. Spring context files are included in the distribution. They are organized by components, layers and features.

The Spring context operation.xml contains the operation definitions. Each operation is defined as a prototype, so that new operations are created every time, and each is injected with some DAO objects, a rule engine, or any other dependencies it may need.

For example the DomainCreateOperation could be configured as the following:

| |
|---|
| < ! -the operation implementation --> |
| <bean id="abstractWriteOperation" abstract="true" |
| class="com.verisign.businesslogic.operation.impl.Abstract |
| WriteOperationation"> |
| <!-- support services --> |
| <property name="operationldentificationSource" |
| ref="operationIdentificationSource" /> |
| <property name="operationAuditingService" |
| ref="auditTransactionService" /> |
| <!-- Business Rule Engine --> |
| <property name="engineExecutor" ref="engineExecutor" /> |
| <!-- Validator --> |
| <property name="validator" ref="springValidator" /> |
| </bean> |
| <bean id="CREATE-DOMAIN-OPERATION" |
| parent="abstractWriteOperation" |
| scope= "prototype11 |
| class="com.verisign.businesslogic.operation.impl.DomainCrea |
| teOperationlmpl"> |
| <!-- Data access objects --> |
| <property name="domainDAO" ref="domainDAO" /> |
| <property name="lookupDAO" ref="lookupDAO" /> |
| <property name="languageDAO" ref="languageDAO" /> |
| </bean> |

Then the invoker could obtain a DomainCreateOperation as:

| |
|---|
| BusinessServices businessService = BusinessServices.create( "core-integration-aspectdao.xml"); |
| |
| DomainCreateOperation domainCreate = businessServices.newOperation (DomainCreateOperation.class); |

Note that DomainCreateOperation is an interface and the invoker is not (and should not rely) on the implementation. BusinessServices once again is the facade to the operation factory instance and should be initialized once at startup with the relevant context configurations.

### Operation Aspects

The cross-cutting concerns discussed earlier are implemented through aspects. In particular AspectJ's compile-time weaving is useful. AspectJ supports runtime and compile time weaving. Considering the many problems that can rise from runtime byte manipulation (classloader issues, startup problems, weaving when unit testing, increased risks, etc.), compile time weaving is utilized in some embodiments of the present invention. Compile time weaving also allows validation and visualization of the aspects (where are they applied) during the implementation due to Eclipse support of AspectJ via the AJDT plugin.

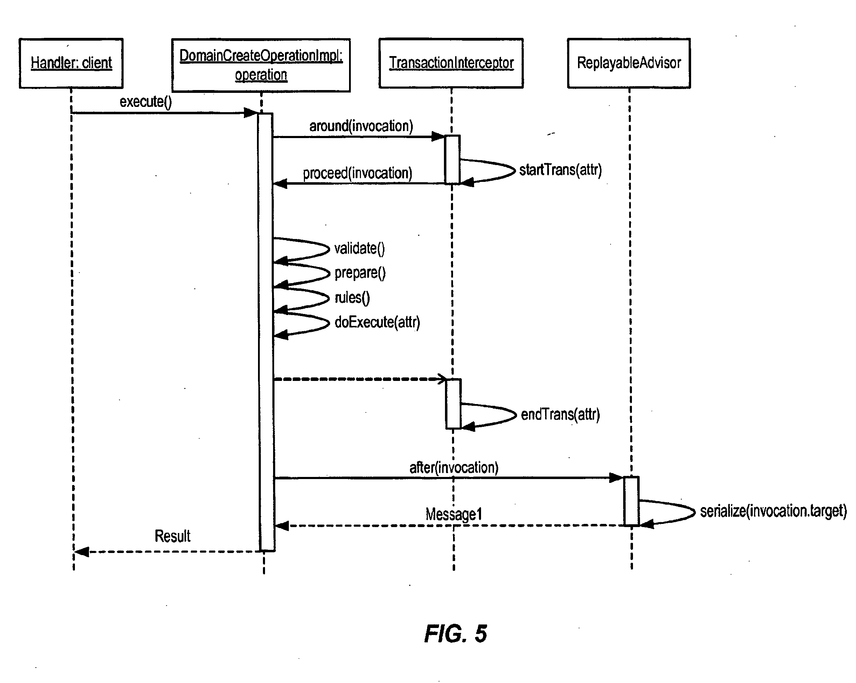

FIG. 5 is simplified sequence diagram illustrating an operation according to an embodiment of the present invention. As illustrated in FIG. 5, the sequence diagram shows the operation, and two of the advices applied to all operations, and gives an idea of an operation when client calls execute () on a operation obtained from the operation factory. Referring to FIG. 5, a client calls execute () and, in response, a domain create operation is transmitted to a transaction interceptor. A transaction is started and a proceed is provided in response to the invocation of the transaction. Validation, preparation, application of rules, and execution are performed as illustrated.

Embodiments of the present invention implement a number of crosscutting concerns as aspects that are applied to the operation execution based on code annotations:
- Exception management - shields the client from unchecked exceptions occurring in the BPL.
- Authorization - applies various security rules/requirements.
- Re-player - writes to the re-player log when applicable. This logic is applied *after* the successful execution of the operation.
- Transaction management - creates a transaction when required, and eventually commit/rollback if applicable.

According to some embodiments of the present invention, the ordering of applying aspects matters. For example, re-player advice is activated only on the returning if the transaction was successful and the operation persisted data, but the exception management is on top because it must handle any exception that might be thrown by lower level advices.

A common thing for all aspects (except for Exception management) is that they are all triggered at the operations *execute ()* method but are configured by the annotation on the concrete operation class. This is only because the concrete operation is the unit of work that needs to be configured. In Spring, the aspects and annotations are applied on a method or all methods in a class, because for that case, the method is the unit of work that needs to be configured. In the following sections, it should be noted that the operation is the unit of work, not some method.

### Exception Management

Exception management is an aspect that translates the checked and unchecked internal exceptions into one of the business logic checked exceptions. This hides the implementation specific exceptions (e.g., Spring's DataAccessException) from the client. Based on the exception type, it throws an exception subclass of OperationException containing an error code related the problem and the original cause for it. For example, the runtime DataAccessException will be converted to a DataOperationException containing the original DataAccessException and a business logic error code.

The client needs to handle only business logic checked exceptions, and in very few cases it may have to look into the cause. This aspect is implemented as a top-most "on throw" advice so that it can also handle exceptions thrown by other aspects (e.g. transaction management may throw DataAccessException on commit).

### Security

In order to protect the entities managed by the system, an application level security is applied by introducing authentication and authorization processes. According to embodiments of the present invention, the application knows, at all times, who the user is, what entities are being manipulated, and where (or what action is being performed) and - based on that - grants or denies access. Because there are various types of clients, the security aspects of the application are designed to be compatible (usable) and separately configurable by the clients as well.

Custom code can be utilized to fetch the subject's credentials and permissions. The security context can be propagated in a thread local. Spring-Security provides (through interfaces) generic functionality and methods for subjects look up, etc that are used as a base. JAAS applies authorization through code access control and policies, while Spring-Security via interceptors (at code or instance level) and annotations, Spring configuration.

Spring-Security supports ACL and Role based authorization out-of-the-box but it also allows custom code to make security decision based on method invocation instance. That means we can implement security policies based on runtime context - current method invocation, session, arguments, manipulated entity, etc.

The user's details, credentials, authenticated state, and authorities are stored in an Authentication object which then is stored in a thread local. If needed, the Authentication object can be accessed via
SecurityContextHolder. getContext ( ) .getAuthentication ( ) at any point in the business layer. The following are some explanations of the Spring-Security concepts and behaviors:
- The user details include registrar details, like ID, channel ID, and related metadata.
- Role-based authorization is where security decisions are based on users' assigned authorities (roles or groups).
- A voter is an authorization rule that may use an Authentication object, an invocation, and its arguments to make a security decision. Voters can be grouped in various ways to allow or collectively veto attempted actions.
- A user privilege is a permission to execute particular operation. It is based on user's type, status and operation type.
- User groups come from NCC and are organized into a hierarchy, where the leaf groups are actually low level permissions to products.

### Authentication

According to embodiments of the present invention, each thread that executes operations holds an Authentication object. The Authentication object is set via one of the AuthUtils.setClientAuthentication methods.

The Authentication object is a security token, which can be either:
- Not-authenticated - in which case the business logic security aspect will try to authenticate it using the configured authentication providers and replace it with an authenticated token for the current thread. The token contains the needed credentials for the authentication to work. Either SubjectAuthenticationToken or StandardAuthenticationToken are used depending on the client type.
- Authenticated - token that already has been previously authenticated, either by a previous operation execution or by the SessionCreateOperation, in which case no additional authentication is performed.

The following are the valid tokens that the client could set for each thread:
- StandardAuthenticationToken - unauthenticated token containing full user credentials and additional security details (like sessionid, channel).
- SubjectAuthenticationToken - unauthenticated token containing a valid JAAS Subject object presenting user identity and additional security details (like sessionId, channel).
- NamingAuthenticatedToken - an authenticated token containing user details, credentials and additional security details (like sessionId, channel).

After a successful authentication, business logic internal code is guaranteed to have access to a valid NamingAuthenticatedToken via AuthUtils.getAuthenticationToken() with all necessary user details.

In an embodiment, two set of authorities are loaded from the database for each authenticated user:
- Privileges - operation types that can be executed by the user, based on user's type and status.
- Groups - list of high level groups and permissions for use of products.

The authorities are used for performing authorization.

### Authorization

Using the security aspect, an authorization is performed for each operation execution. The authorization process for a particular operation depends on the operation's security requirements and a set of security voters. For example, the following annotation can be applied to any operation class that is constrained by privilege and requires users with write permission of the used sub-product:
@SecuredOperation({"PRIVILEGED", "SUBPRODUCT-RW"})

The "PRIVILEGED" keyword triggers a special PrivilegedVoter that decides whether the user is privileged for that method invocation. The "SUBPRODUCT-RW" triggers a SubProductVoter which looks for particular group in the user's authorities.

This example shows that various security rules can be combined when creating security constraints. The business logic specific @SecuredOperation annotation is similar to the @Secured annotation from Spring-Security but it applies only to the execute() invocation of the annotated operation.

### Decision voters

During authorization a security rule (called a Voter within Spring-security) is triggered if a corresponding keyword appears in the security configuration for an operation (as discussed above). Each voter can deny, grant access or abstain. The security layer is configured in some embodiments so that all voters that get activated must grant access in order for authorization to pass.

In an embodiment, there are two voters:
- PrivilegeVoter gets activated by "PRIVILEGED_USER" keyword and allows access if the user has authority to perform the invoked operation type. As mentioned earlier, the privilege type of authorities are loaded for the user during authentication.
- SubProductVoter gets activated by "SUBPRODUCT-RW" or "SUBPRODUCT-RO" keywords, which means the user authorities must contain the corresponding permission (RW or RO) for the used sub-product. For example, if an operation is configured with SUBPRODUCT-RW, and it is executed for "dotCOM" product then the user must have DOTCOM-RW in the list of his permission authorities.

### Integration with Enterprise Applications

In cases where business logic is used within JEE application where authentication is already performed with JAAS, it is preferable to use the SubjectAuthenticationToken for client authentication. As in any multilayer application, the authentication credentials of the client are not available at low levels and is not practical to perform two authentications anyway. In JEE applications, the security context (thus the Subject) is naturally available almost anywhere, so the Subject can be easily passed to the business logic's authentication providers via the same method as within the standalone applications. JAAS security context is even propagated across EJB invocations, so business logic can also be invoked on remote servers.

### SessionCreateOperation

SessionCreate operation is a special operation that allows clients to pre-authenticate with users credentials once, get hold of the authenticated NamingAuthenticatedToken and keep it for as long as they need. This operation also creates a session record in the database for auditing purposes.

Some of spring-security components that support the authentication and authorization process can be customized or re-implemented for business logic purposes, because of the specifics of the problem domain.
- NamingUser contains all details about the registrar that can be loaded from the database.
- NamingAuthenticationToken contains the authentication data needed to authentication a registrar, including the channel ID.
- PegasusPasswordEncoder is a custom password encoder that supports Pegasus encodings.
- StandardAuthenticationProvider and SubjectAuthenticationProviders are implementations of AuthenticationProvider that utilizes the rest of the custom components

All the custom components and the rest of the Spring-Security infrastructure are assembled together by a Spring context file (security.xml) to form a reusable security layer.

### Transaction Management

Transaction management relates to starting, committing, and rolling back transactions. Most of slightly advanced business applications need some form of transaction management. One of the best practices related to this topic is to be non-intrusive to the business logic code itself (i.e., not repeated throughout the application but instead defined centrally and ubiquitously). One reason is separation of concerns. Business logic shouldn't care for transactions issues. In embodiments, the operation layer, the service layer, and the DAO layer shouldn't see it. Another reason is reusability. If you are embedding transaction information in a component by extension, that transaction code wouldn't be elegantly reusable in another context. For at least these reasons, some embodiments have externalized transaction management. Transaction management can be considered from two perspectives: transaction demarcation and transaction strategy.

### Transaction Demarcation

Spring provides aspect-based transaction demarcation on methods. The transactions are applied on the execute () method of operation annotated with @TransactionalOperation, where the annotation also specifies the transaction attributes.

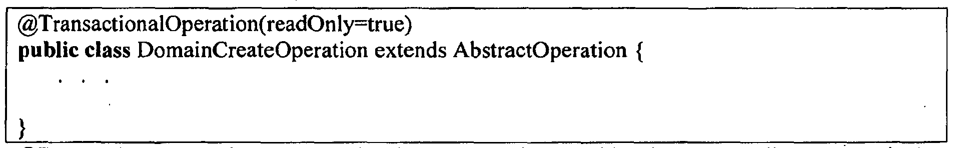

@TransactionalOperation is a class-level annotation that provides the same attributes as Spring's @Transactional annotation, the only difference is that it configures transactions only on the execute () method of the annotated operation.

Transactions denoted by @Transactional and @TransactionalOperation are compatible, because they are managed by the same code. The benefit from this is that if a read-only transactional operation uses a rule that requires write transaction, the transaction started by the operation will be reused by the rule and will be flagged as write transaction. This way, read-only operations could became write operations depending on the rules used.

### Transaction Strategy

When a thread is entering a method that requires a transaction, Spring needs a concrete transaction manager. For this purpose, Spring provides a simple interface (PlateformTransactionManager). The most suitable strategy for a situation is decided in the configuration file.

Embodiments of the present invention generate SCN numbers for each database

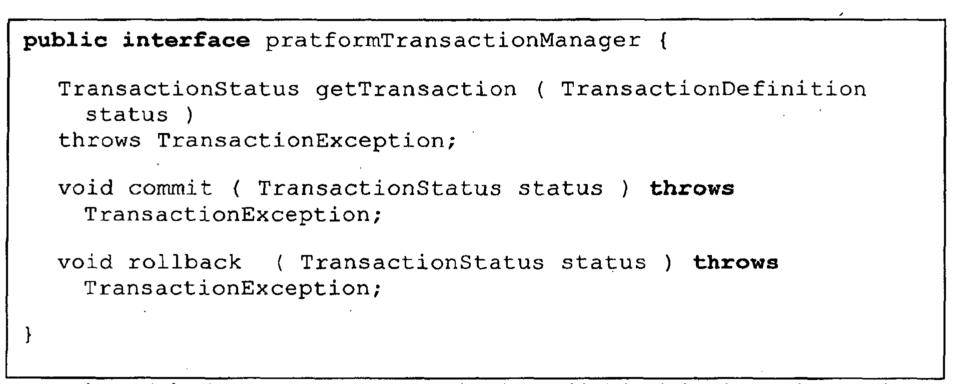

transaction and, tor that reason, a stored procedure is provided that is invoked at the end of transaction instead of normal commit. This functionality is implemented in a customized version of a PlatformTransactionManager (based on JDBC transaction manager), which also works (as normally) when the transaction is not in an Operation. The generated SCN number is automatically set into the Operation's result object by the transaction aspect.

### Automatic Rollbacks

By default the transaction aspect will roll back a transaction if the execute () method throws any OperationException. This can be customized per operation via @TransactionalOperation and transaction attributes. For example @TransactionalOperation (rollbackFor={Exceptionl.class, OperationException.class}).

### Timeouts

Operations do timeout, either because of a deadlock in the database or slow processing time. An operation execution that takes longer that a specified time-out is thus rolled back by the transaction aspect or transaction manager. In some cases (like in EPP server) the invoker may need to have full control over the timeouts, so that it can perform particular actions in case the business logic does not return soon enough. For that reason, Operations implement TimeoutSupporter so that they can be timed out by an invoker.

However, Operation client invocations to timeout cannot be honored once the transaction aspect takes over and initiates commit of the transaction; at that point, the data are "in transit" to the database and cannot be recalled or interrupted. All the functionality for timeouts is in the transaction aspect, which not only makes operations to implement TimeoutSupporter, but also provides the implementation since it is tightly coupled with the rest of the transaction logic.

Some operations may need to perform code that is not or must not be part of the operation transaction. For example, validation is not performed inside the operation transaction, because it's extra overhead to deal with transactions before accessing the database. For such cases, the Operation will implement a TransactionAwareOperation interface:

| |
|---|
| public interface TransactionAwareOperation { |
| |
| void beforeOperationTransaction () throws |
| OperationException; |
| |
| } |

The beforeOperationTransaction () for a given Operation can implement any validation or cleanup logic, beforeOperationTransaction () is called by the Transaction aspect just before starting the transaction but after the security aspect.

Embodiments of the present invention provide a high fidelity re-player that logs sufficient information so that an operation can be "re-played" in the future. Replay occurs, for example, after a database crash. This mechanism is used when the lower level database transaction log mechanism is not sufficient or not usable for some reason.

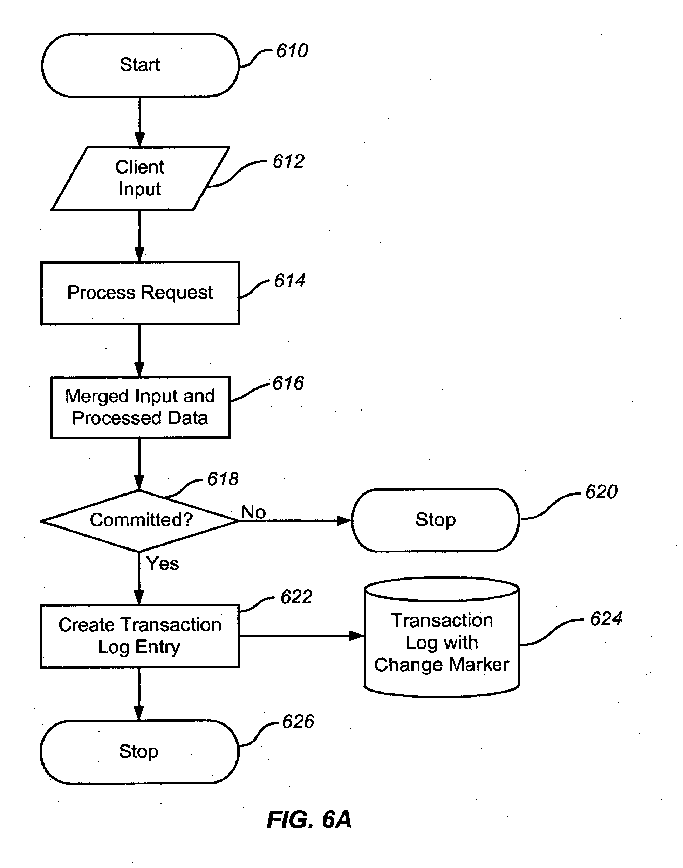

FIG. 6A is simplified flowchart illustrating a method of creating a transaction log according to an embodiment of the present invention. Referring to FIG. 6A, the process starts at 610 and client input is received at 612. Examples of client input include items that utilized in domain name registration EPP requests including the domain name, the registration period, the name servers, and the like. The client input can also be referred to as user input. In response to the client input, a request is processed (614), producing processed data and the client input and the processed data are merged (616) to form merged client input and processed data. As an example, the current date and the registration period could be used in computing the expiration date, for example, a year from the current date. Thus, the client input (e.g., registration period of one year) and the current date is utilized to generated processed data (e.g., the expiration date). The client input and the processed data are then merged as illustrated at 616. This data will be utilized later during a replay operation in which this processed data, also referred to as calculated data, is utilized in regenerating a database that provides expiration dates based on the original processed data, not an expiration date computed based on the replay date.

At 618, a determination is made of whether or not the merged input and processed data is to be committed to the transaction log. If an error occurs with the transaction, it may not be committed to the transaction log. For example, if a registration period of 11 years is requested and the registration periods are capped at 10 years, the transaction will produce an error and not be committed. If it is not committed, the process stops at 620. If, on the other hand, the merged client input and processed data is to be committed, a transaction log entry is created at 622, including, for example, the date the entry is created, the updated data (e.g., the expiration date, etc.), and a change marker. The change marker reflects that when the data is committed, the order of operations is preserved. In an embodiment, a stored procedure in the database is called and instead of directly committing the data, a piece of software is used to commit the data and the software returns the change marker. Thus, embodiments, utilize the significance of the order of transactions so that the data this is received, the calculated values, and the position in the flow of transactions is preserved, for example, for future replay. As described more fully below, when a replay operation is performed at a later time, sorting of transactions based on the change marker can be performed so that transactions can be replayed utilizing the merged data computed at the original execution.

As described throughout the present specification, embodiments of the present invention replay transactions using, only what was passed in initially by the client as a client input, but also the data that was generated at the time that the operation was initially executed, referred to as processed data. In contrast with systems that merely record only the client input, embodiments of the present invention provide merged data to the transaction log that can be utilized during the replay operation. The presence of the processed data as part of the merged data enables the capability to verify the transactions have happened in the past as well as to replay these transactions.

As discussed above, the transaction log entry along with a last change marker is stored in a transaction log database (624) and the process is stopped at 626. It should be appreciated that the specific steps illustrated in FIG. 6A provide a particular method of creating a transaction log according to an embodiment of the present invention. Other sequences of steps may also be performed according to alternative embodiments. For example, alternative embodiments of the present invention may perform the steps outlined above in a different order. Moreover, the individual steps illustrated in FIG. 6A may include multiple sub-steps that may be performed in various sequences as appropriate to the individual step. Furthermore, additional steps may be added or removed depending on the particular applications. One of ordinary skill in the art would recognize many variations, modifications, and alternatives.

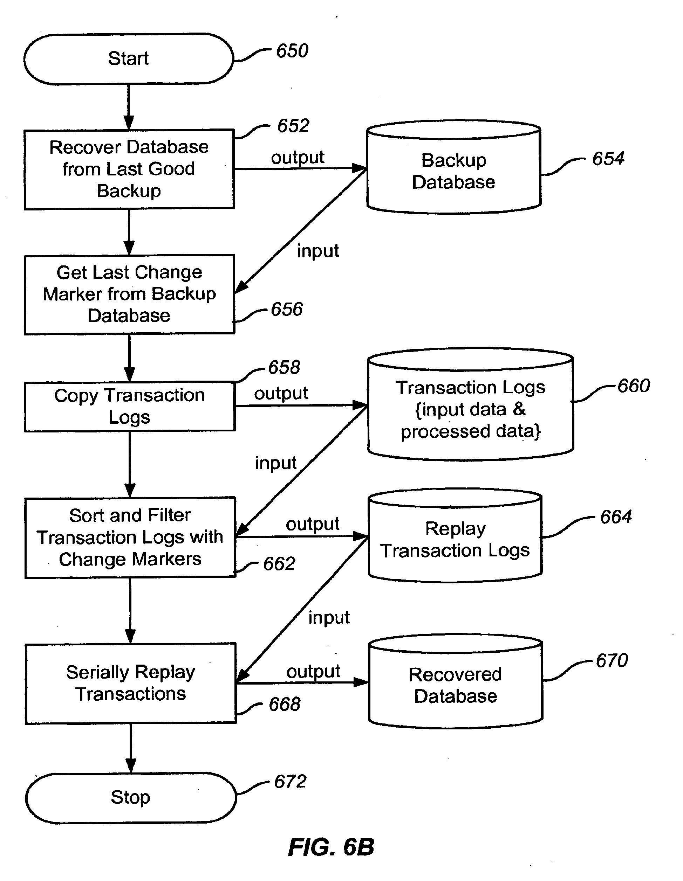

FIG. 6B is a simplified flowchart illustrating a method of replaying transactions to recover a database according to an embodiment of the present invention. In some embodiments, the method of replaying a transaction is referred to as a high fidelity replayer.

Re-player functionality is implemented by an aspect ReplayerAspect executed after successful execution of the previous layers, including the transaction management. The replayer aspect is highly coupled with the transaction aspect because the decision whether it records or not is based on the result or actions of the transactions. According to some embodiments of the present invention, transactions are logged only if they are successfully committed.

There are various ways to implement the actual operation serialization based on the ReplayerEncoder.
- Operation classes that have their actions recorded are annotated with @Replayable. In such operation classes, the arguments (presented as properties) to be recorded are annotated with @ReplayableArgument (ReplayerConstant. XXXX). At runtime, the advice will examine the operation and will serialize the annotated arguments' values.
- In cases where the above approach is not applicable (because of performance or encoding issues), the serialization is delegated from the aspect to the operation itself, if the operation implements the CustomReplayable interface. In some embodiments, since the aspect is defined as replayable, coordinators are enabled to delegate the serialization.

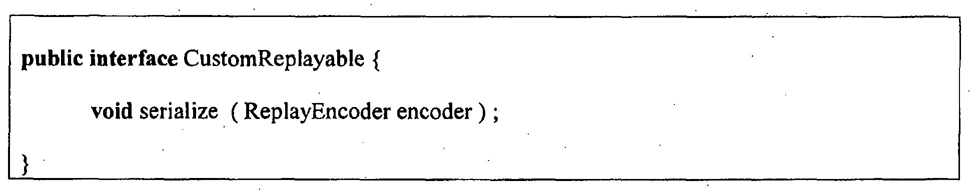

It should be noted that since not all operations are writable right, for example, some operations are read only. Embodiments of the present invention provide the ability to annotate the classes with an indicator that the class is read only or writable. As described herein, the operations that are replayable are annotated accordingly.

The high fidelity re-player performs an operation, not only with previous values, but also with the same transaction date and ID coming from the auditTransaction. Thus, embodiments of the present invention rebuild exactly the same database after a full database crash recovery. The auditTransaction concept encompasses the concept that for replay two days from the time that the transactions actually occurred, the system will replay the transactions using the processed data illustrated in 616 (e.g., the same transaction date and transaction ID that was used in the original transaction and stored in the transaction logs) in contrast with a transaction date that is based on the current time stamp. Thus, embodiments of the present invention utilize transactions dates that are consistent during replay.

This functionality is implemented as follows. The re-playable operation implements the "ReplayableOperation" interface that allows the client to pass previous the transaction ID and date. This may be implemented using the AbstractWriteOperation. A Stored procedure enables adding an AuditTransaction in the database with an existing ID and date that has been created. The AuditTransactionService calls a method for audit transaction creation if the previous transaction ID and date has been provided.

Referring to FIG. 6B, the method starts at 650 and recovers a database from the last good backup (652). An output of the recovery process is backup database 654. The backup database will provide a starting point for the recovery process. A last change marker is extracted from the backup database (656). As an example, utilizing Oracle databases, a system change number (SCN) that is recorded in the database can be extracted. In embodiments, the last change marker (e.g., the SCN) will provide a transaction from the database at which replay can be begin. Although the SCN is discussed as an example, the concept of the last change marker is database independent and other suitable markers are provided by and extracted from other database systems. As described more fully below, in an embodiment, all transactions with change markers after the last change marker will be replayed. Although the arrow from 654 to 656 is illustrated as data passing from the backup database to the operation at 656, this is merely illustrative and one of skill in the art will appreciate that a request can come from 656 to 654 to initiate the extraction of the last change marker.

The method also includes copying transaction logs (658) to provide transaction logs (660). As an example, transaction logs can be copied from application servers running in support of DNS provisioning services. Merely by way of example, 30 application servers can be running in a data center. The application servers are logging transactions on their local disks in addition to performing operations on a batch basis that are interfacing with the database and being logged to a local disk. Thus, in this example, each application server includes a local cache of transactions stored in a transaction log format. The local transaction logs that are copied are stored, including both client input and processed data (e.g., expiration dates and change markers)) to form a database of transaction logs (660). Although application servers and their local disks are used as an example, other sources of transaction logs are included within the scope of the present invention. One of ordinary skill in the art would recognize many variations, modifications, and alternatives.

Using the database of transaction logs, the transactions in the transaction logs are sorted and filtered to produce a database including replay transaction logs (664). During the sorting and filtering operation, the change markers from the transaction logs as well as the last change marker extracted at 652 are utilized in some embodiments. As an example, sorting of the transactions represented by the transaction logs will include sorting the transactions based on the change markers, which are continuously incrementing. The transactions can then be filtered (or filtered prior to sorting) to preserve transactions that occurred after the last change marker. Thus, the transactions that occurred since the completion of the last good backup are replayed in order. Continuing with the example discussed above, the transactions in the transaction logs copied from the 30 application servers can be sorted to provide a list of transactions sorted by time and filtered to only include transactions with change markers following the last change marker. Since each transaction has a change marker provided from an authoritative source, sequential sorting of the transactions is possible and performed by some embodiments. As discussed above, an output of the sorting and filtering process is the Replay Transaction Logs (664).

As another example of filtering, if the last good backup was one day in the past and an application server local disk includes transaction data for the past two days, filtering of the transaction logs from the local transaction log cache can be performed to only utilize transactions that followed the last good backup (i.e., the last day), filtering out the transactions more than one day old. Thus, embodiments of the present invention filter transaction logs to provide a list of transactions that are then replayed since these transactions have a change marker following the last change marker from backup database 654.

Utilizing the Replay Transaction Logs, the transactions are serially replayed to generate or reconstruct the recovered database (670). The recovered database 670 thus includes transactions that occurred since the generation of backup database 654. In the replay process illustrated herein, the correct input data is utilized including the correct dates of the transactions and the processed data associated with the original transactions to provide an accurate recovered database. The process is stopped at 672. Because embodiments of the present invention sort and filter the transactions to provide an order list of transactions, a single flow is possible in which the transactions are replayed in a serial manner to reconstruct the recovered database.

It should be appreciated that the specific steps illustrated in FIG. 6B provide a particular method of recovering a database by replaying transactions (e.g., from an application transaction log) according to an embodiment of the present invention. Other sequences of steps may also be performed according to alternative embodiments. For example, alternative embodiments of the present invention may perform the steps outlined above in a different order. Moreover, the individual steps illustrated in FIG. 6B may include multiple sub-steps that may be performed in various sequences as appropriate to the individual step. Furthermore, additional steps may be added or removed depending on the particular applications. One of ordinary skill in the art would recognize many variations, modifications, and alternatives.

### Input Validation

A mechanism is provided to allow for failure as soon as inconsistent and/or invalid data is detected. By failing fast, embodiments of the present invention prevent creation of unnecessary objects and execution of processes that cost time and resources. Because of the nature of the system, the validation process is split across multiple layers. As an example, it might not be possible to detect a validation error until it is midway through an Operation's execution. It is possible to distinguish between two types of validation: Input data validation and Business validation.

Input data validation is applicable to any type of registry (or provisioning system) and business validation is specific to a registry or provisioning system. The business validation can be seen as a set of policies for a specific system. Usually, the business validation is executed in form of business rules through the business rule engine. As the validation may differ from system to system, embodiments of the present invention include the ability to apply different validators to an Operation depending on the registry as needed. In order to have a set of pluggable validators, the validator interface is defined as follows:

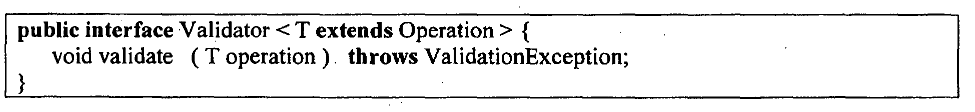

The interface allows the system to interchange a concrete validator implementation as needed, rendering the module maintainable and flexible. In addition, the module is testable as each validation implementation can be tested in isolation. An operation can be configured with different validator instances depending on the client and usage. In order to simplify the validation, Spring-Validation module is used in some embodiments as a base for implementing a more generic operation validator. Spring-Validation allows a set of hand-coded or declarative validation rules to be applied to an object based on its type. What rules are applied to what operations is defined in a XML file and it can be changed from the Spring context. Further, Spring-Validation provides for high speed operation.

An example how the validation rules are defined is as follows:

| |
|---|
| <class |
| |
| name="com.verisign.naming.businesslogic.operation.impl.Doma inCreateOperationImpl" > |
| |
| <global> |
| |
| <!-- global validation rules go here --> |
| |
| </global> |
| <validator |
| class="com.verisign.naming.businesslogic.validation.validat |
| or.DomainCreateOperationValidator" /> |
| |
| </class> |

In this example, a hand-coded validation rule is used for performance reasons. For other operations, declarative rules might be more convenient. For example:

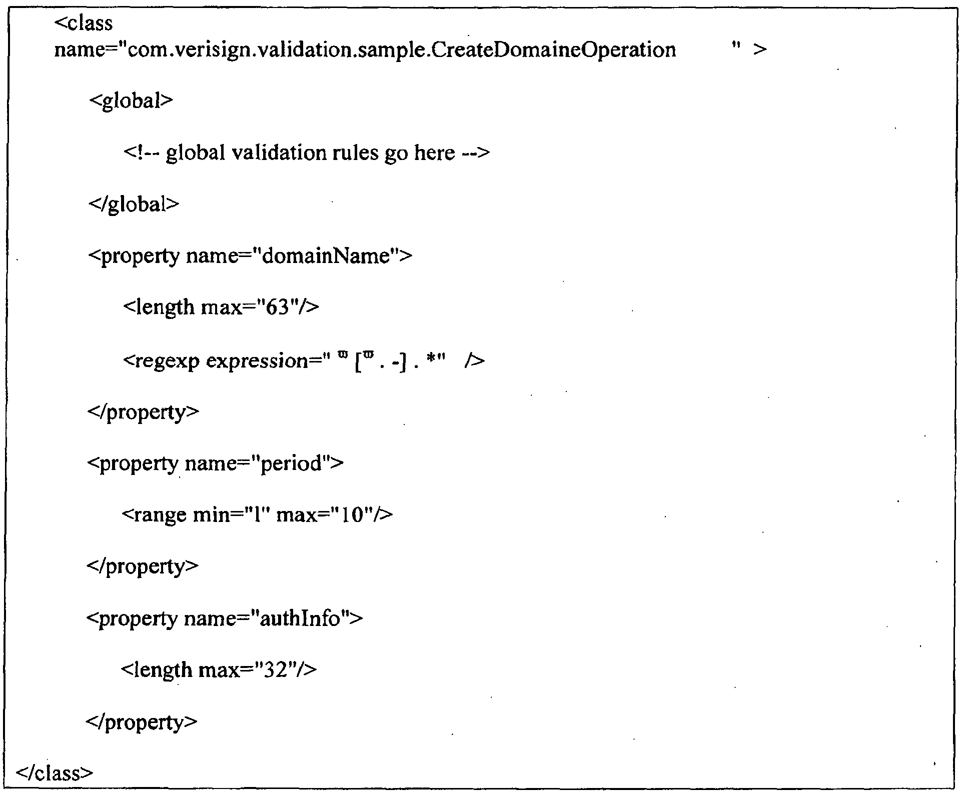

### Business Entities

Business entities are value objects representing the state of a given business-specific concept. Such objects in a registry system include Domain, Host, IPAddress, and Registrar. Depending on the registry type (e.g., thin and thick, to name two), entities may vary from one system to another. They are composite objects, made of properties and structured sub-entities. A Domain object may contain not only its name, ID, and creation date, but also a list of NameServer objects, for instance. Relationships between entities are implemented using their IDs or names. Thus the child objects do not need to be loaded to have a valid Entity in memory; they can be loaded only when needed.

Business entities are used by the Business Rule Engine (BRE) and the operation's core logic, It is the operation that is responsible for instantiating these objects. Because they are passed to the BRE, to which business rules are strongly typed, there is a form of coupling between the operation and the rules. The operation is aware of the object types expected in the BRE.

The operations and rules may require access to the same entity related business logic and for that a set of services contains that logic which itself is based on a layer of relevant DAOs. Should it need to, the operation may use directly the relevant DAOs to fetch the business entities from the persistency layer (cache, DB, etc.). It then passes it along to the BRE. As such, business entities should not access the data storage layer by themselves. In the case where dependencies of the entity must be loaded, this will be performed within the service where the entity will be populated with the required dependencies (if missing). If a concrete operation is based on AbstractOperation, the template pattern implemented there is respected. The entities are created or loaded in *preExecute()* method, and can be safely used (after passing the business rules) in the *doExecute()* method.

### Result Objects

Result objects hold the data resulting from successful operation execution. The result types:
- are defined by the operations themselves.
- are exposed to clients via interfaces.
- have their implementations instantiated by the operations.

### Strongly Typed Operation Execution

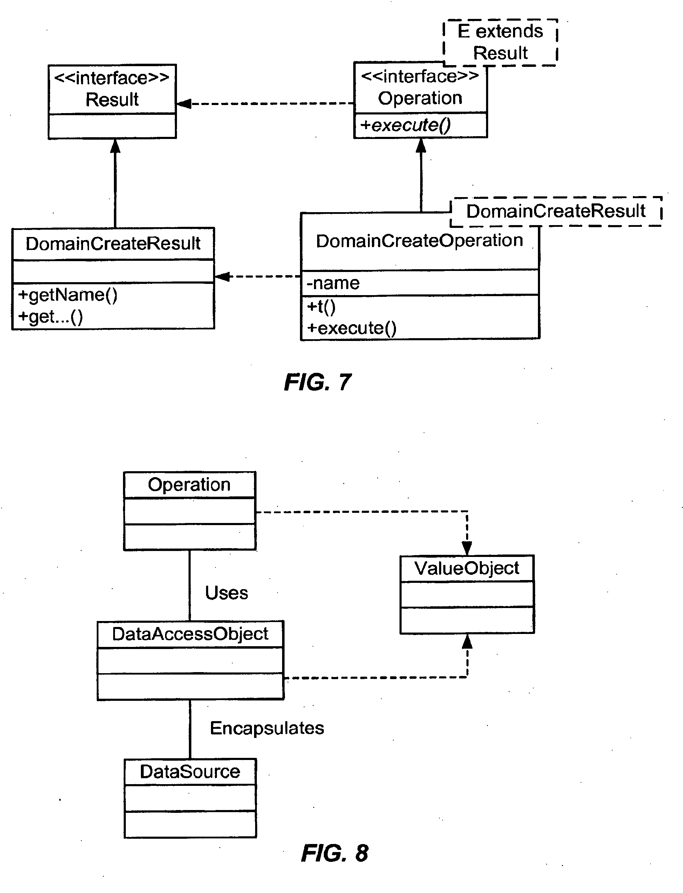

There are a certain number of OperationResult objects, where each operation's execute method returns a specific instance. Thanks to a generic parameter, operations declare their return types so that the execute method signature clearly states the contract and what the expected Result object is. FIG. 7 is a simplified schematic diagram illustrating a class diagram according to an embodiment of the present invention.

The following Operation interface shows the generic return type of the execute method.

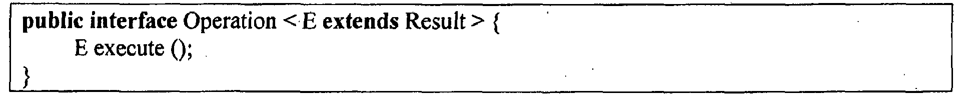

The following concrete DomainCreateOperation implements the Operation interface, overriding the execute method with a generic DomainCreateResult object.

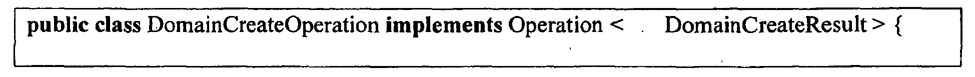

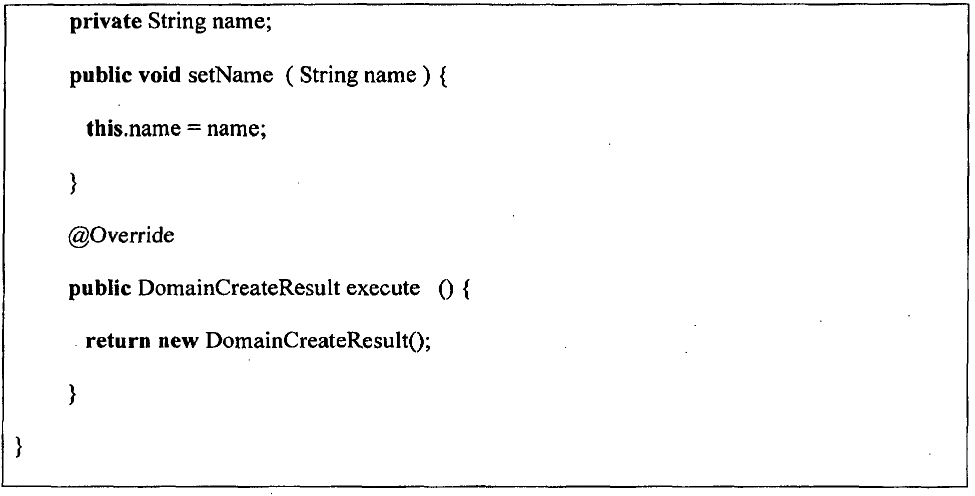

The following shows a client executing the operation and getting a specific Result object.

| |
|---|
| DomainCreateOperation operation = |
| businessServices.create(DomainCreateOperation.class); |
| |
| operation.setName("whatever.com" ); |
| |
| DomainCreateResult domainCreateResult = |
| operation.execute(); |

### Result Objects and Checked Exceptions

In terms of contract, the execution of an operation returns a result object when the operation is successful. In the other cases, the operation will throw a checked exception, whose base class will be OperationException. Direct subclasses are:
- ValidationException
- OperationTimeoutException
- SecurityException
- UnknownRuntimeException

### Implementation Considerations

According to embodiments of the present invention, the database schema is accessible through a set of stored procedures and functions that are the "public API" for accessing the data. The database also uses various custom types for input or output arguments. For business logic, several approaches can be utilized: Plain JDBC implementation; Spring's StoredProcedure (an instance of StoredProcedure is configured with procedure name, arguments, mapping classes for arguments; the stored procedure instance is invoked from the DAO method); Spring's SimpleJdbcCall (an instance of SimpleJdbcCall is configured with the schema and procedure name; arguments are loaded from the schema metadata; mapping classes are specified when the call is invoked at runtime from the DAO method); Stored Call Invoker Aspect (a Spring based Aspect that intercepts a method invocation and instead invokes a preconfigured (during startup) StoredProcedure. The StoredProcedure instance is configured based on method annotations.)

Stored procedures and functions are similar to a Java method - they have names, typed parameters, and return values. This approach of invoking a stored procedure is trying to match the two signatures as much as possible. The differences and the missing information are specified with Java annotations. From the perspective of the Java code, the store procedure will be invoked just as any other method call.

The following is a method signature that represents a database function with one return value, three input parameters, and one output parameter.

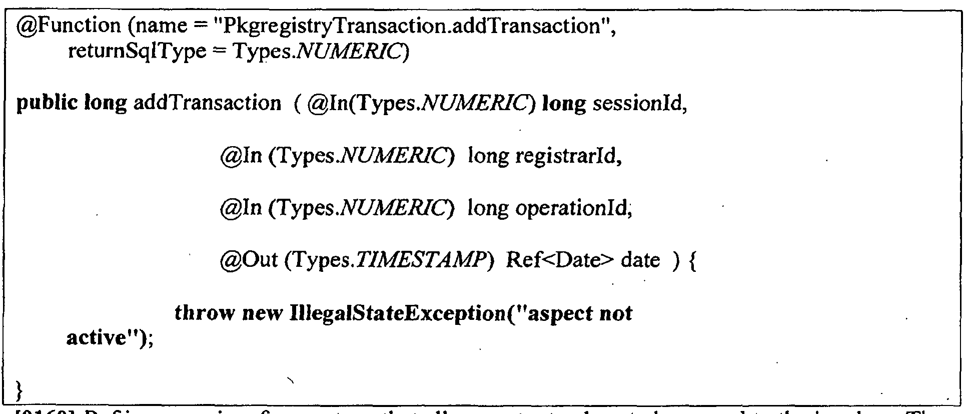

Ref is a generic reference type that allows output values to be passed to the invoker. The @In and @Out annotations are to identify the parameter types. The order and types must match 100% the function declaration in the database.

Instead of the method body, the stored procedure will be invoked based on the annotation information via interception (aspects). Although aspects and proxies are typically not used for implementing the logic in DAOs, they allow intercepting method invocations. Aspects were selected for this feature because the rest of the system is based on aspects and for their better performance.

Since parsing the method signature and preparing the StoredProcedure instance needs to happen only once per method, the aspect does it only when the object containing the method is associated with a data source. Here again, the same aspect intercepts that association and prepares one StoredProcedure instance for each annotated (@Function or @Procedure) method. The StoredProcedure will be configured with all the parameter types and result set mappers. To get a data source, the method's enveloping class must implement DataSourceAware interface. DataSourceAware.setDataSource must be invoked by the object creator (normally the Spring context that instantiates the DAO objects and services) before any stored procedures calls. This allows also usage of multiple data sources in the same application, but not in the same class. The class that contains the method declaration does not need to follow or be part of any pattern, but for performance reasons it is preferred to be stateless and be created only once at start up with one different instance per data source.

A generic result set mapping is as follows:

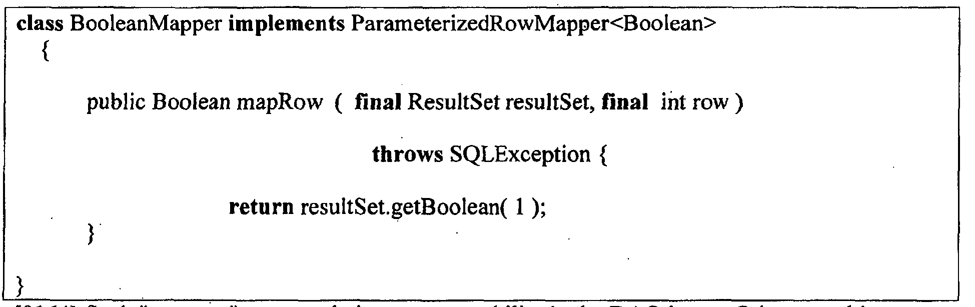

Such "mappers" can greatly improve reusability in the DAO layer. Other reusable "mappers" are the database's custom type conversions. For example:

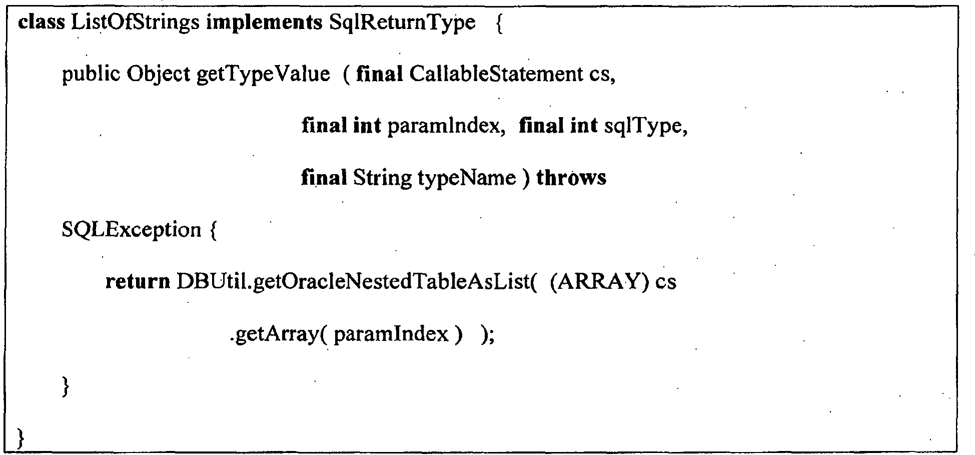

Mappers are applicable to @Function or @Procedure's output parameters annotated with @Out, and are specified as rowMapper attribute to the @Out annotation. If the DAO layer requires invocation of SQL statements, the result set mappers or the custom types mappers can still be reused with Spring's Jdbc package.

### Exception Handling

Because Result objects are returned in cases where the operation succeeds, these can be instantiated in the operation's core logic. Thus, the result object is filled with the appropriate data, gathered from the newObject returned by the business rules and/or by accessing specific DAOs and using client inputs. In the case where exceptions would occur internally in the business tier, the dedicated exception layer (throw advice to the operation) would be in charge of catching them and turning them into the appropriate checked exceptions, together with an error message/number.

### Infrastructure Aspects

Various general purpose (not operation related) aspects are developed to support the surrounding infrastructure. Although Stored Call Invoker Aspect is one of the infrastructure aspects, it is discussed in detail in the DAO section of this document.

In many cases, a set of data or a result from database query is cached for a period of time so that many trips to the database or processing time can be saved. Some of the data is cached forever (e.g., supported languages indexed by code) others for an hour, and still others not by time but by other factors. For a method that simply returns some data based on a query (method parameters), an aspect can intercept the method call and check whether it has a cache entry based on the method parameters. In case it has, it simply returns the cached object and ignores the method body. If not, then it invokes the method and after that it can store the return object in its cache.

@Cache ("cachePolicy") annotation is used to denote a method and the cache policy. Since the caching is based on ehcache, the cache name is used as a policy and the ehcache configuration can specify various cache definitions that can be used across the code. Exceptions can also be valid results from a method call (e.g., finduser (name) may throw UnkownUserException) and it may be desirable to cache specific exceptions as a valid result. For that, the @Cache (exceptions={UnkownUseException.class}) annotation can be used. The aspect caches the thrown exception and then re-throws it on subsequent invocations.

The caching aspect does not change the invokers' expectations in any way, and in this respect the aspect is completely transparent. The code can work with or without aspect or with any implementation of the caching functionality. If the aspect is not configured with a cache manager at runtime then the caching is completely ignored. This can help in test cases where the developer wants to hit the database each time. In cases when the data is large and kept forever, it is better to load them before anything else, i.e., at initialization. For that, an addition "preload" attribute is introduced to @Cached annotation. During Spring startup, a post-initialization component goes over the beans defined in the contexts and looks for preload=true attribute in @Cached methods.

The following are some examples:

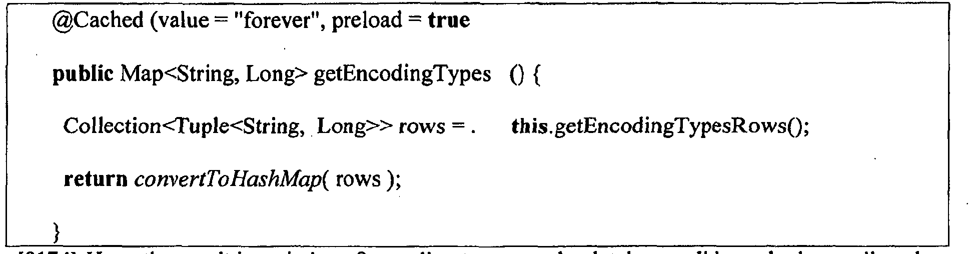

Here, the result is an index of encoding types, so the database call is cached as well as the data conversion from rows to a HashMap. It should be noted that the cache key consists of reference to the object owning the method, the method, and arguments to the method. This will ensure that different cached values can be stored for different instances of the object. An example case is when there are two instances of the same DAO class configured to work with two different database instances - the results in such cases are not mixed.

### Data Access Objects

Data Access Objects (DAOs) are accessed through an interface, allowing maximum flexibility and the container-configured injection of the concrete implementation. FIG. 8 is a simplified schematic diagram illustrating access to Data Access Objects according to an embodiment of the present invention. The operation obtains or modifies a value object that is passed to a data access object to be persisted to or fetched from the underlying data source.

The Spring framework provides a rich set of helper/utility functionality through the abstract DaoSupport class that facilitates easier and faster implementation of the DAO layer. In addition, the DaoSupport object provides facilities for argument type checking, function invocation, exception handling, and result-to-VO mapping. In addition, it translates the DB specific errors to a hierarchy of generic data access exceptions. Another feature that Spring provides is the StoredProcedure class, which is an abstraction of RDBMS stored procedures.

A simplified example is provided as follows:

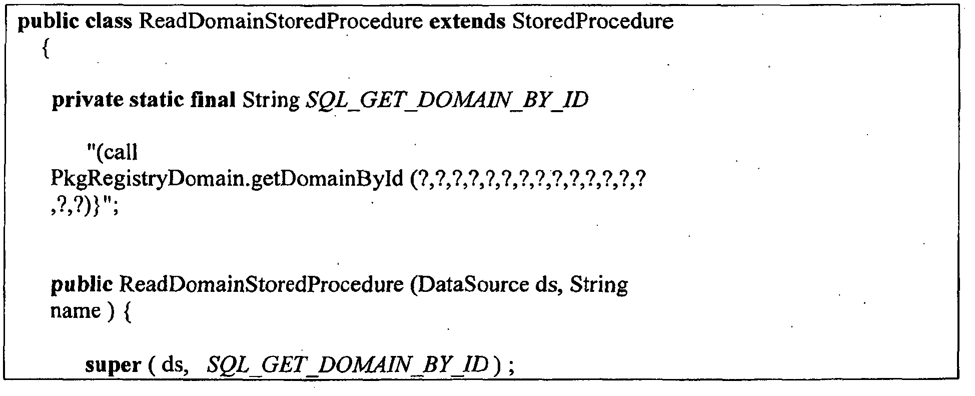

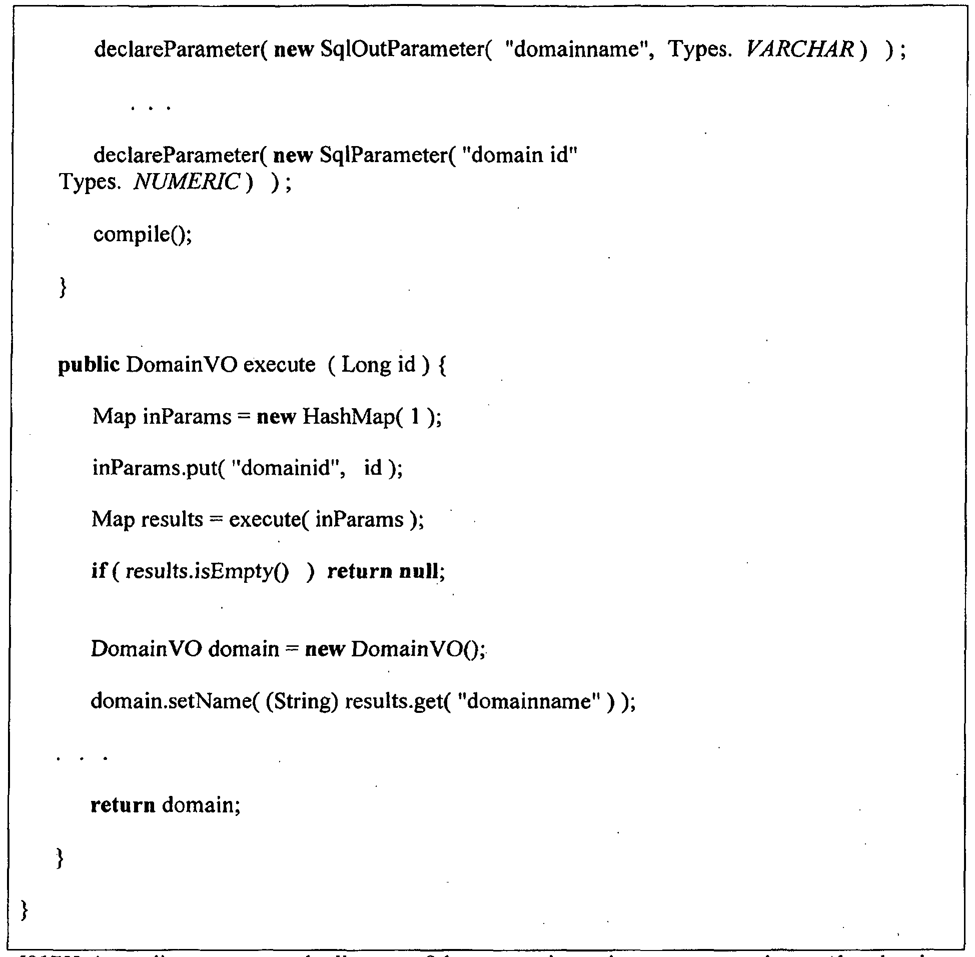

According to some embodiments of the present invention, every stored procedure has its own class. The concrete stored procedure classes could be injected to a data access object. This enables testing of the DAO objects in isolation by plugging mock stored procedures, throwing SQL exceptions, or returning data without hitting any actual underlying data source.

The business logic public API can be used as a *black box* by client software (e.g., NCC, EPP Handler, web services, or the like. The contract of the operation's execution is that a successful operation will return a specific result object. In case the operation execution fails, a checked exception will be thrown back to the client.

Checked exceptions will denote the following type of issues:
- Validation problems (unable to process the operation with the provided parameter values)
- Unexpected technical problems (DB down, missing configuration file, and so on)
- Server policy violations (e.g., cannot renew a domain name for more than 10 years)
- Authorization not successful (user not allowed to execute a given operation)
- Operation unsuccessful for other reasons (base class for all previous business logic exceptions)

As discussed earlier, execution failure will result in some kind of OperationException. This concrete exception (or one of its subclasses) will be thrown from the operation or infrastructure code and is handled by the business logic client. While having different types of OperationException is provided by embodiments of the present invention, exception classes are not typically created for each possible type of failure. In an embodiment, only high level failures are mapped to exception types, while the detailed error information is provided as error codes and text. An exception type could be thrown with a predefined set of error codes. For example, SecurityException can be thrown with the relevant error codes - AUTHENTICATION_FAILED, AUTHORIZATION_FAILED, etc., but not with CREDIT_LIMIT_EXCEEDED. The codes that an exception can accept is specified within the concrete exception itself. The error codes can also be easily mapped to another set of errors (e.g., to HTTP errors) depending on the invoker's use cases.

Internally, the application layers may throw specific unchecked exceptions in some embodiments. These exceptions are caught by an Aspect. Each layer throwing an unchecked exception internally is responsible for setting the error number/message as appropriate. For instance, this could occur when a registrar that doesn't have sufficient rights to accomplish an operation (for instance, the registrar is not the owner of the domain that it attempts to renew). In such a case, the authorization layer will throw a runtime exception and set an appropriate error code and message. This exception will be caught higher up and turned into an instance of one of the available checked OperationException subclasses. Because the error code and message are set in the run-time exception, they can be set in the checked exception. The exception cause could be used; however, this in some cases could be seen as a breach of encapsulation, since the internal exception would be visible from outside.

Another example would be a call to a stored procedure that produces a JDBC Exception. This runtime exception will be caught by the same high level layer and re-thrown as a checked exception (unexpected technical problem). However, this dedicated layer will be responsible for filling in an error number and message because it wasn't handled by the DAO layer itself. The exception-handling layer - the aspect responsible for exposing only OperationException instances to the clients - may need to know the context of the SQL exception in order to properly convert it. When this is the case, the business logic caller to the DAO will wrap the call in a try/catch and throw the context-specific exception. For instance, if a stored procedure throws a "row not found" exception, it could be because (1) an update-domain command didn't find the domain, (2) an update-host command had a similar problem, (3) a transfer-request command couldn't locate a registrar, or (4) a similar event occurred.

### Exceptions and the Business Rule Engine

In the Pegasus implementation used in some embodiments, the BRE does not throw exceptions. In the case where a business rule fails, a Resultobject is set with an error code and messages. In this situation, it would be the Operation that is responsible to check the result of the business rule execution, and eventually throw a checked exception BusinessRuleException (extends OperationException). Error code and message can be read from the Resultobject. The business logic client would then explicitly catch the BusinessRuleException and handle it as needed, rather than handling it as normal OperationException.

In some embodiments, the Business layer is assembled by a set of Spring contexts into one ApplicationContext instance. Since the business logic is composed of several components, a separate Spring context file will be created for each of them, so that the final assembly for each client could also vary if required. Any configuration settings that are constants during runtime will be injected into the relevant components' properties rather than being polled by the components whenever needed. Spring supports properties injection from any Resource, where a resource could be property file or even a data source (table in a DB). Any property could be overwritten by a system property set at startup. The various spring contexts are located in the same packages where the components reside.

The following are the contexts grouped by layer:

### • Exception handling

com/verisign/naming/businesslogic/exception/exception.xml
com/verisign/naming/businesslogic/exception/aspect/aspectj.xml

### • Data Caching

com/verisign/naming/businesslogic/cache/cache.xml
com/verisign/naming/businesslogic/cache/registrar-session-data.xml
com/verisign/naming/businesslogic/cache/aspect/aspectj.xml

### • Replayer

com/verisign/naming/businesslogic/replay/replay.xml
com/verisign/naming/businesslogic/replay/aspect/aspectj.xml
com/verisign/naming/businesslogic/replay/tool/replaytool.xml

### • Business Services

com/verisign/naming/businesslogic/service/impl/service.xml

### • Operation Validators

com/verisign/naming/businesslogic/validation/validation.xml

### • Operation Implementations

com/verisign/naming/businesslogic/operation/impl/operation.xml
com/verisign/naming/businesslogic/operation/impl/pooled-operation.xml

### • Security Infrastructure

com/verisign/naming/businesslogic/security/security.xml
com/verisign/naming/businesslogic/security/aspect/aspectj.xml

### • Datasource based on Pegasus factory

com/verisign/naming/businesslogic/db/datasource/datasource-core.xml

### • DAO layer (spring only)

com/verisign/naming/businesslogic/dao/oracle/dao-domain.xml
com/verisign/naming/businesslogic/dao/oracle/dao-audit.xml
com/verisign/naming/businesslogic/dao/oracle/dao-user.xml

### • DAO layer (aspect + spring)

com/verisign/naming/businesslogic/dao/oracle/stored/dao-language.xml
com/verisign/naming/businesslogic/dao/oracle/stored/dao-lookup.xml
com/verisign/naming/businesslogic/dao/oracle/stored/dao-domain.xml
com/verisign/naming/businesslogic/dao/oracle/stored/dao-audit.xml
com/verisign/naming/businesslogic/dao/oracle/stored/dao-nameserver.xml
com/verisign/naming/businesslogic/dao/oracle/stored/dao-user.xml

### • Transaction Management

com/verisign/naming/businesslogic/transaction/transaction.xml
com/verisign/naming/businesslogic/transaction/aspect/aspectj.xml

### • Rules Engine

com/verisign/naming/businesslogic/bre/pegasus-bre-engine-config.xml

Based on the above, component contexts are created the following contexts targeted for particular environments or clients: cas-integration-aspectdao.xml; integration-aspectdao.xml; and eppas-integration-aspectdao.xml. Business logic users could use the component contexts to create their own client setups and refer to the existing ones as samples.

The purpose of the Business Rule Engine is to provide the ability to associate Business Rules with a command (operation) and have them executed in sequence before and/or after the operation's core logic executes. If a rule fails, the subsequent rules and operation logic are discarded. Both X Work or Pegasus are good candidates to serve as BRE.

Business rules can be seen as re-usable components/services. They usually act upon business objects and can perform read operations on the persistency layer (through DAO) and update the in-memory objects they have been given. In order to make it possible for each rule to access the required DAOs, the rules are Spring-managed so that they can be injected with the appropriate DAOs automatically.

### Crosscutting Business Aspects

Due to the nature of the provisioning business, some of the functionalities are applicable to only some entities in some embodiments. For example, in terms of crosscutting business aspects, Domain entities can be seen as Transferable and Billable. In order to generalize and abstract some of the business operations, high level business oriented interfaces can be defined so that they can be applied across entities. This approach will help in writing precise business rules that will apply to either business entities (Domain) or business interfaces (Billable).

In some implementations (e.g., Pegasus), business rules implement the BRERule interface, which utilizes three parameters. These parameters are anyObject, oldvalue, and newValue (all Java, lang.Objects). The purpose of anyObject is to have a context-related data container in the rule, outside the oldValue and newValue. Oldvalue and newValue Objects represent business entities. In order to enforce the use of strongly typed, well defined business rules, the Pegasus business rules interface can be enhanced with a generic parameter. This will allow concrete business rules implementations to specify the business entity/business interfaces upon which they act, thus avoiding type casting in the method. It also enforces an explicit contract between the caller and the business rule.

Moreover, in order to avoid having items passed as context to the business rules (first parameter), it is possible to use an ExecutionContext object instead of the actual anyObject.

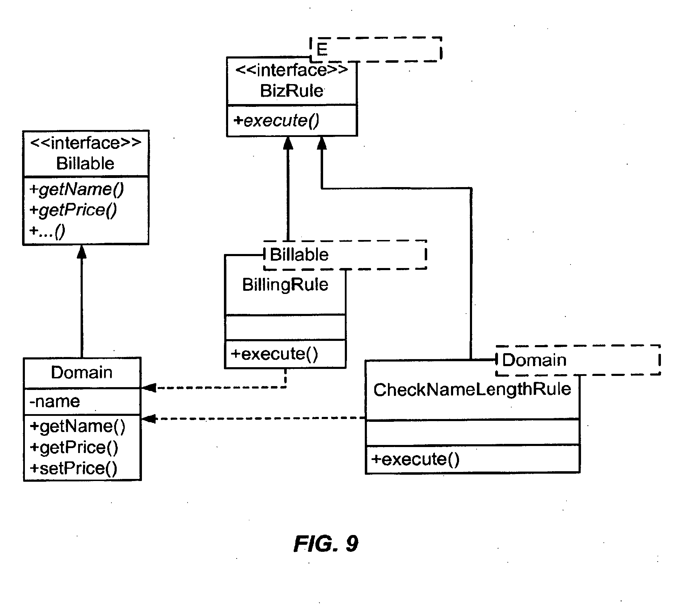

FIG. 9 is a simplified schematic diagram illustrating an overall class diagram according to an embodiment of the present invention.

The following illustrates a simple business-oriented interface.

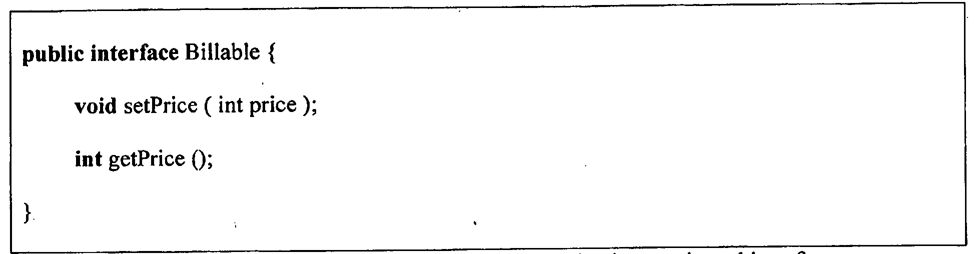

The following illustrates an entity implementing a business oriented interface.

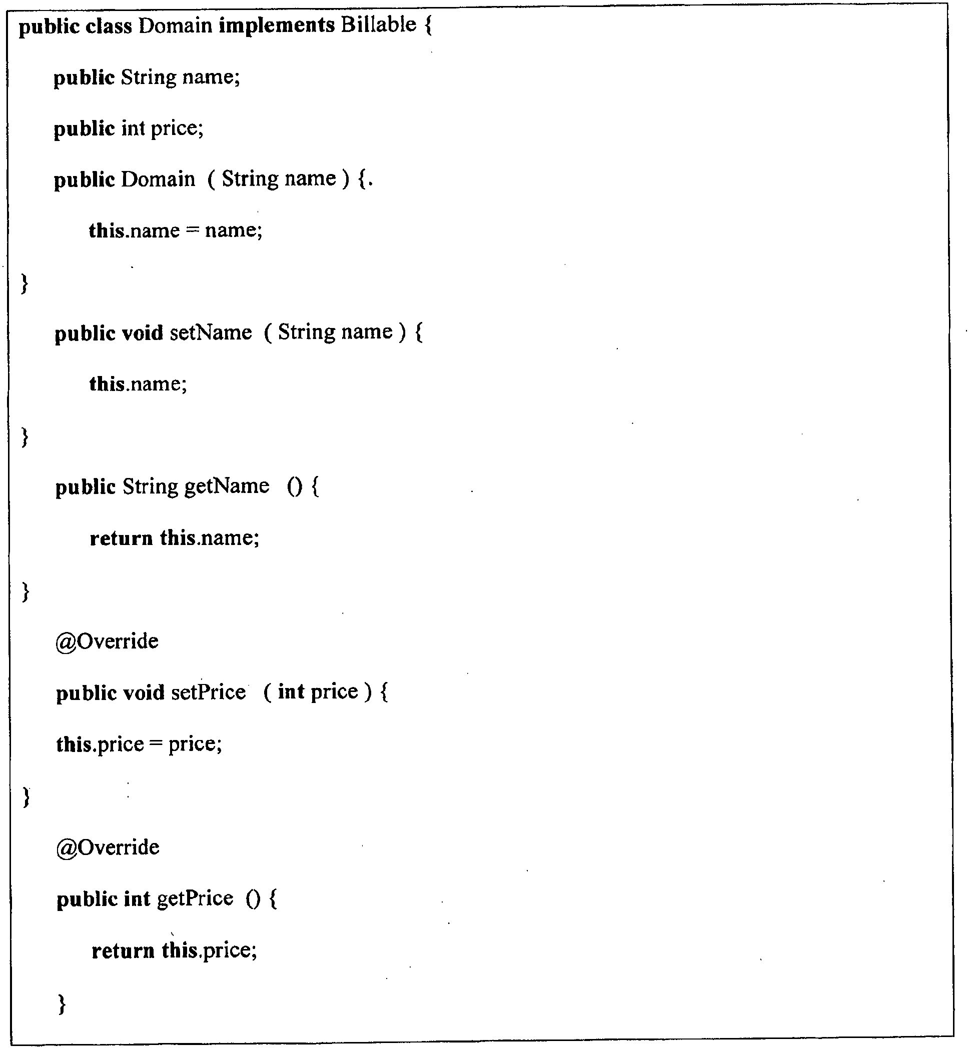

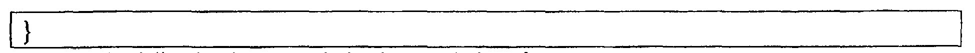

The following is a generic business rule interface.

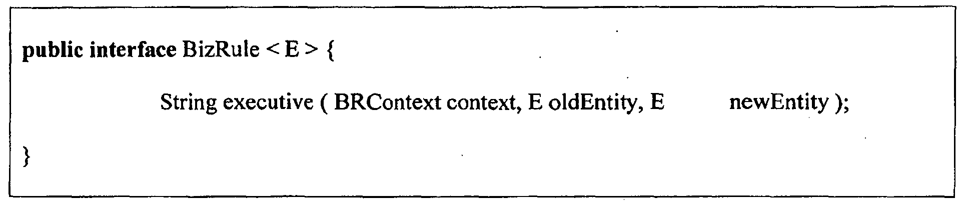

The following illustrates a simple concrete business rule applicable to Domain business entities.

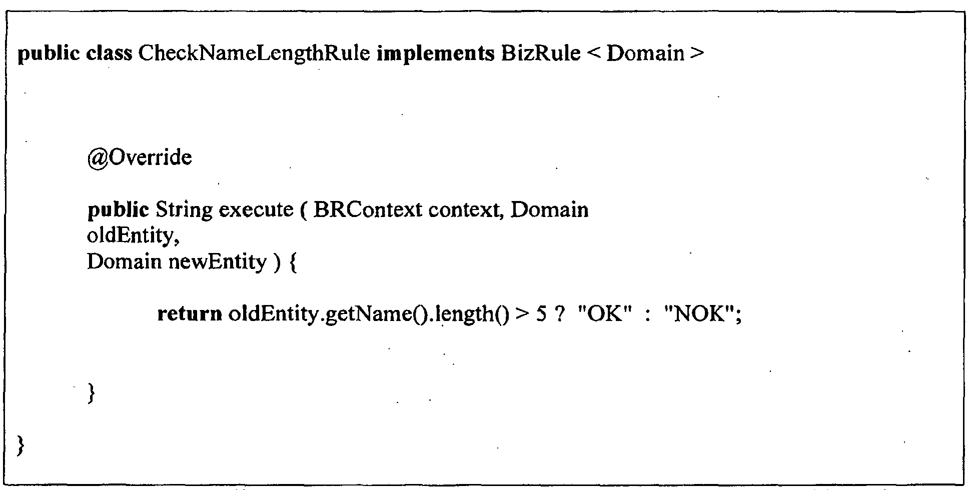

The following illustrates a simple concrete business rule applicable to Billable business entities.

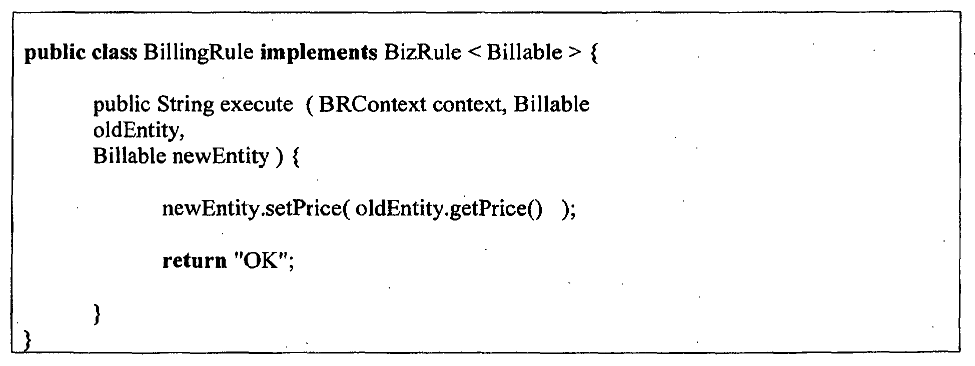

### Configuration of the Business Rule Engine

The configuration mechanism associates a list of individual rules with an operation. Configuration files are specific to each implementation in some embodiments, making it possible for an operation class to be associated with different business rules, depending on the context of the application. Given an operation, the BRE will look up the associated business rules and execute them in a pre-defined sequence.

The handling of the result is also configurable. As an example, it can be a two-level mechanism, with a *global-rule* section mapping error strings to error numbers/messages, and a per-rule configuration section, allowing the mapping of error strings to error numbers/messages on a rule-by-rule level.

### Error Mapping and Exception Handling

Depending on the implementation, embodiments currently either return error codes or throw exceptions, caught in the BaseRule object. These are then mapped to the appropriate Resultobject, based on the configuration file. Some embodiments provide an enhancement in which runtime exceptions are allowed to be thrown back to the operation, so that the exception layer handles them instead of a BaseRule class.

According to one approach, the Pegasus rule engine is enhanced with ResultHandler classes, in charge of shaping the business rule results to meet client's expectations. In such cases, business rules could be reusable and still have different possible behaviors depending on the handler. Some embodiments provide an enhanced business rules interface with: a generic parameter, enabling a strongly typed execute method on business entities/interfaces; and an ExecutionContext object holding contextual values required by the BR. Other embodiments utilizes business rules that are Spring-managed, suitable for DAO injection. Yet other embodiments make it possible to split configuration over several XML files.

Depending on the implementation, one or more of the following features may be included in embodiments of the present invention:
**Logging** - A logging framework can be used and applied in accordance to the best logging practices.
**CAF re-usable components** - Applying CAF components, such as exception handling, logging and security.
**AspectJ load-time weaving -** Providing an alternative approach to Spring's dynamic proxy mechanism.
**Security roles and permissions -** Defining security roles and detailed access rights to the system functionality.
**Pegasus result handler** - Enhancing the Pegasus business rule engine.
**Integration/functional testing** - Utilizing a tool for performing integration tests across layers and the system as a whole.
**Business transactions** - Implementing business transaction details and application.

As described herein, Pegasus is a BRE whose configuration is XML based. It is useful for pricing rules and the DotName registry to support the execution of all business rules. In addition to use in provisioning/naming applications, it is totally decoupled from these specific aspects and truly re-usable. It not only provides a rule chaining mechanism, but also some other useful features such as error code mapping and rules categorization (arid sub-categorization), thus allowing channel-specific or pre/post business rules.

Other embodiments utilize a JSR-94 Business Rule Engine, which is a Java Specification Request whose scope is "to define a lightweight-programming interface that constitutes a standard API for acquiring and using a rule engine." It specifically excludes defining a standard rule description language to describe the rules within a rule execution set. JSR-94-compliant BREs are often referred to as "expert systems," "decision making systems," or "inference systems." Usually based on some form of the Rete algorithm (pattern matching), their main task is to make decisions (what to do) based on axioms (what is there). Depending on the product, rules can be expressed in many different ways, such as through decision tables, programming languages, dedicated dialects and even XML syntax.

To use such a BRE, the operator would initiate a session, set axioms (the operation, the value objects, and the like) and let the BRE act according to these data based on some decision tables (generated from the rules descriptor/classes). It would then take the applicable actions and return updated value objects to the caller. This approach is very different from executing a known list of rules in sequence. JSR-94 rule engines are applicable in the context of complex algorithms depending on various factors, where conditions may often evolve quickly. Often, these engines are meant to be configured and maintained by non technical person (such as business experts).

As an example, a mortgage decision system could make proposals based on the people's situations (age, marital status, revenue, number of children, pets, etc.), the house itself (size of the parcel, building a new house vs. buying an existing one, age and general state of the house, neighborhood, location, city vs. countryside, how secure is the area, etc.) and even the current general economic situation (recession, inflation, inter-bank rate, how well does the bank perform currently, what are the insights for the future, etc.). Combining all these factors together and (de)composing them into some form of readable/maintainable/testable algorithms is a complicated endeavor.

Because of the complexity described above, some embodiments do not utilize a JSR-94 BRE. Moreover, even though the JSR-94 defines a public API, it doesn't specify anything about the implementation of the rules (dialect, decision table, and that sort of thing).

XWork is an open-source framework implementing the GoF command pattern. It is maintained by OpenSymphony and constitutes the heart of Struts2. Its main unit of work is the Action. An Action can be decorated with Interceptors. Interceptors may either break the chain and return to the caller or call the next Interceptor. XWork uses a ValueStack (accessible from a threadlocal) for passing required objects (parameters and context) along the Interceptors to the Action. It also provides powerful mechanism for managing Interceptors and Action results. Compared to some implementations, XWork offers a wider range of features and some useful out-of-the-box Interceptors. It also integrates nicely with Spring IoC and its configuration mechanism.

### Result Handler in Pegasus

In order to enhance the handling of results, the ResultHandler classes may help decompose actions to be taken upon the result before returning to the caller. In order to achieve this, some embodiments add result *filters.* These filters would be in charge of shaping the result to the client expectation (NCC plug-in, handler, or other client). For instance, error messages may need to be internationalized or customized on a per-client basis. One could also take extra actions, like logging these errors to some dedicated log file or sending emails. As such, one handler could be used to throw appropriate runtime exceptions, set with error messages and codes, to be caught by the dedicated exception layer. In terms of configuration files, a default ResultHandler or ResultHandler chains could be configured globally for the business rule engine. Each individual rule can then optionally specify whether the default handler is applicable (default to true) or specify another ResultHandler or ResultHandler chain.

### Unit Testing Framework

The particular unit testing framework utilized by embodiments of the present invention will depend on various factors, including ease of use, strong support of the community, and predicted longevity. As an example, TestNG's extra features are shown below.

| **Name** | **Description** | **Discussion** |
|---|---|---|
| Grouping | This feature allows you to put your unit tests in different groups and then run tests on individual groups. | In order to get full benefit of unit testing, some embodiments run all the tests before building or releasing. Therefore running only a portion of the test base may not be sufficient. This feature could have a purpose if running tests takes too long. However, the best practice is to make your tests fast in order to refrain from this behavior. |
| Test suite ordering of unit tests | You have the possibility to put your tests in a specific order. | It breaks the principle that tests should be independent from one another. It is very interesting to notice that JUnit 4.x removed this feature. |
| Rerun failed tests | This principle allows you to only rerun tests that failed in a previous run. | Using this feature could be very dangerous because in fixing some tests you can break others. You could get a misplaced confidence by rerunning only the failing tests. |
| Parametric test | This feature allows you to create tests dynamically. | In using this feature, there is a strong likelihood that your test is no longer readable. |

The purpose of the JSR-303 Bean Validation (http://icp.org/en/isr/detail7idK303) is to define a meta-data model and API for JavaBeans validation based on annotations, with overrides and extended metadata through the use of XML validation descriptors.

Currently there are three JSR-compliant implementations listed:
- XWork Validation Framework
- Commons Validator
- Hibernate Validator

### XWork Validation Module

The XWork framework was evaluated as a potential framework for the custom business rule engine (BRE) implementation. The XWork validation module is a good fit to the XWork Action object, which is its main unit of work. The idea behind the validation module is to be able to configure a set of validation rules and apply them to the XWork Action through an Interceptor. The configuration is done through an XML file.

Using the XWork validation in combination with the BRE implemented on top of the XWork framework would mean invoking the validation during the business rule execution process as opposed to validating the input data before the BRE is invoked.

### Hibernate Validation Framework

The Hibernate Validation framework sees validation as a crosscutting concern and applies it using annotations. It comes bundled with a set of common validators (@NotNull, @Email, @Max, and so on), as well as allowing for the creation of custom made validation rules. The module is intended to be used to implement multi-layered data validation, where constraints are expressed in a single place (the annotated domain model) and checked in various different layers of the application by passing the annotated domain model to the Hibernate validator for validation.

As the data input validation rules might differ among registries, re-use of the code base would result in a manual adaptation of the annotation constraints, causing creation and maintenance of a different code base per registry.

The framework would be a good fit if the client creates specific value objects to pass the data to the Operation. However, in some embodiments, pre-configured operation is obtained from the operation factory and the client sets the data it has to the operation. The Operation validates the data as soon as the execute method is called and before creation of business entities that will be passed to lower layers.

### Commons Validation

The commons validation module contains a mini framework for validation of JavaBeans based on an XML file configuration and an independent validation routine package. The Commons Validator allows you to define validations for your user input fields, provide internationalization support in the form of locale-specific error messages, and create custom validators. There are several built in validators that we can use, and if the custom validators do not serve the purpose we can write our own.

Validation rules and validation methods are defined using XML files. The definitions can be in one or many files. The validation methods file defines the validators to be used and names the class that actually implements the validator. This class does not need to implement any specific interfaces or extend another class. It should simply conform to the definition, as specified in the method file.

It is also understood that the examples and embodiments described herein are for illustrative purposes only and that various modifications or changes in light thereof will be suggested to persons skilled in the art and are to be included within scope of the appended claims.

## Claims

1. A method of recovering a database, the method comprising the steps of:
after the database becomes unavailable, extracting (652), using a processor, a last change marker from a backup database;
copying (658), using the processor, transaction logs from a plurality of application servers;
creating (660), using the processor, a transaction log database including the copied transaction logs, wherein each transaction in the transaction log database including the copied transaction logs includes input data, processed data, a timestamp corresponding to a transaction log time, and a change marker that reflects an order of transactions of the copied
identifying (662), using a sorting and filter module, one or more transactions in the transaction log database including the copied transaction logs that have change markers that follow the last change marker;
executing (668), using a replay module, the one or more transactions that were identified; and
generating (670) a recovered database (268) including the one or more transactions that were executed

2. The method of claim 1 wherein the one or more transactions are associated with operation classes annotated with an indicator associated with recovery.

3. The method of claim 1 wherein the generating the recovered database (268) comprises:
generating the recovered database based on a last good backup to the backup database.

4. The method of claim 1 wherein transactions of the copied transaction logs comprise domain name registration transactions and dates associated with each of the domain name registration transactions.

5. The method of claim 1 further comprising:
filtering the transactions in the transaction log database including the copied transaction logs to discard transactions having change markers following the last change marker.

6. The method of claim 1 wherein the executing (668) the one or more transactions comprises:
executing the one or more transactions in a serial order corresponding to a change marker respectively associated with each of the one or more transactions.

7. The method of claim 1 wherein the transaction log entry comprises an expiration date associated with a domain name.

8. A database recovery system comprising:
an input/output module (269);
a processor coupled to the input/output module;
a backup database (263) coupled to the processor, wherein the backup database includes a last change marker;
wherein the system further comprises:
a database of transaction logs (266), wherein each transaction of the transaction logs includes input data, processed data, a timestamp corresponding to a transaction log time, and a change marker that reflects an order of transactions of the one or more transaction logs;
a sorting and filter module (262) coupled to the database of transaction logs and operable to identify one or more transactions in the database of transaction logs that have change markers that follow the last change marker;
a replay module operable to execute the one or more transactions that were identified; and
a recovered database (268) including the one or more transactions that were executed.

9. The system of claim 8 wherein the transactions are associated with operation classes annotated with an indicator associated with recovery.

10. The system of claim 8 wherein the recovery database is generated based on a last good backup to a backup database.

11. The system of claim 8 wherein the transaction logs are copied from a plurality of application servers.

12. The system of claim 11 wherein transactions of the transaction logs comprise domain name registration transactions and dates associated with each of the domain name registration transactions.

13. The system of claim 8 wherein the sorting and filtering module is further operable to filter the transactions of the transaction logs and discard transactions having change markers following the last change marker.

14. The system of claim 8 wherein when the reply module is operable to execute the one or more transactions that were identified, the replay module is further operable to execute the one or more transactions in a serial order corresponding to a change marker respectively associated with each of the one or more transactions.

## Patentansprüche

1. Verfahren zum Wiederherstellen einer Datenbank, wobei das Verfahren die folgenden Schritte beinhaltet:
nachdem die Datenbank nicht mehr verfügbar wird, Extrahieren (652), mittels eines Prozessors, eines letzten Änderungsmarkierers aus einer Sicherungsdatenbank; Kopieren (658), mittels des Prozessors, Transaktionslogs aus einer Vielzahl von Anwendungsservern;
Erstellen (660), mittels des Prozessors, einer Transaktionslog-Datenbank, die die kopierten Transaktionslogs einschließt, wobei jede Transaktion in der Transaktionslog-Datenbank, die die kopierten Transaktionslogs einschließt, Eingabedaten, verarbeitete Daten, einen Zeitstempel korrespondierend mit einer Transaktionslog-Zeit und einen Änderungsmarkierer umfasst, der eine Reihenfolge von Transaktionen der kopierten Transaktionslogs reflektiert;
Identifizieren (662) mittels eines Sortier- und Filtermoduls einer oder mehrerer Transaktionen in der Transaktionslog-Datenbank, die die kopierten Transaktionslogs einschließt, die Änderungsmarkierer besitzen, die dem letzten Änderungsmarkierer folgen; Ausführen (668), mittels eines Wiedergabemoduls, der einen oder mehreren Transaktionen, die identifiziert wurden; und
Generieren (670) der wiederhergestellten Datenbank (268), die die eine oder mehreren Transaktionen einschließt, die ausgeführt wurden.

2. Verfahren gemäß Anspruch 1, wobei die eine oder mehreren Transaktionen mit Operationsklassen assoziiert sind, die mit einem mit Wiederherstellung assoziierten Indikator gekennzeichnet sind.

3. Verfahren gemäß Anspruch 1, wobei das Generieren der wiederhergestellten Datenbank (268) Folgendes beinhaltet:
Generieren der wiederhergestellten Datenbank basierend auf einer letzten guten Sicherung der Sicherungsdatenbank.

4. Verfahren gemäß Anspruch 1, wobei Transaktionen der kopierten Transaktionslogs Domänennamen-Registrierungstransaktionen und Daten beinhalten, die mit jeder der Domänennamen-Registrierungstransaktionen assoziiert sind.

5. Verfahren gemäß Anspruch 1, das ferner Folgendes beinhaltet:
Filtern der Transaktionen in der Transaktionslog-Datenbank, die die kopierten Transaktionslogs einschließt, um Transaktionen zu verwerfen, die Änderungsmarkierer besitzen, die dem letzten Änderungsmarkierer folgen.

6. Verfahren gemäß Anspruch 1, wobei das Ausführen (668) der einen oder mehreren Transaktionen Folgendes beinhaltet:
Ausführen der einen oder mehreren Transaktionen in einer seriellen Reihenfolge korrespondierend mit einem Änderungsmarkierer, jeweils assoziiert mit einem der einen oder mehreren Transaktionen.

7. Verfahren gemäß Anspruch 1, wobei der Transaktionslog-Eintrag ein Ablaufdatum beinhaltet, das mit einem Domänennamen assoziiert ist.

8. Datenbankwiederherstellungssystem, das Folgendes beinhaltet:
ein Eingabe-/Ausgabemodul (269);
einen Prozessor, gekoppelt mit dem Eingabe-/Ausgabemodul;
eine Sicherungsdatenbank (263), gekoppelt mit dem Prozessor, wobei die Sicherungsdatenbank einen letzten Änderungsmarkierer umfasst;
wobei das System ferner Folgendes beinhaltet:
eine Datenbank von Transaktionlogs (266), wobei jede Transaktion der Transaktionlogs Eingabedaten, verarbeitete Daten, einen Zeitstempel korrespondierend mit einer Transaktionslog-Zeit und einen Änderungsmarkierer umfasst, der eine Reihenfolge von Transaktionen der einen oder mehreren Transaktionslogs reflektiert;
ein Sortier- und Filtermodul (262), gekoppelt mit der Datenbank von Transaktionlogs und betriebsfähig, um eine oder mehrere Transaktionen in der Datenbank von Transaktionslogs zu identifizieren, die Änderungsmarkierer besitzen, die dem letzten Änderungsmarkierer folgen;
ein Wiedergabemodul, betriebsfähig, um die eine oder mehreren Transaktionen, die identifiziert wurden, auszuführen;
und
eine wiederhergestellte Datenbank (268), die die eine oder mehreren Transaktionen einschließt, die ausgeführt wurden.

9. System gemäß Anspruch 8, wobei die Transaktionen mit Operationsklassen assoziiert sind, die mit einem mit Wiederherstellung assoziierten Indikator gekennzeichnet sind.

10. System gemäß Anspruch 8, wobei die Wiederherstellungsdatenbank basierend auf einer letzten guten Sicherung einer Sicherungsdatenbank generiert wird.

11. System gemäß Anspruch 8, wobei die Transaktionlogs von einer Vielzahl von Anwendungsservern kopiert werden.

12. System gemäß Anspruch 11, wobei Transaktionen der Transaktionslogs Domänennamen-Registrierungstransaktionen und Daten beinhalten, die mit jeder der Domänennamen-Registrierungstransaktionen assoziiert sind.

13. System gemäß Anspruch 8, wobei das Sortier- und Filtermodul ferner betriebsfähig ist, um die Transaktionen der Transaktionlogs zu filtern und Transaktionen zu verwerfen, die Änderungsmarkierer besitzen, die dem letzten Änderungsmarkierer folgen.

14. System gemäß Anspruch 8, wobei das Antwortmodul betriebsfähig ist, um die eine oder mehreren Transaktionen auszuführen, die identifiziert wurden, wobei das Wiedergabemodul ferner betriebsfähig ist, um die eine oder mehreren Transaktionen in einer seriellen Reihenfolge korrespondierend mit einem Änderungsmarkierer, jeweils assoziiert mit einem der einen oder mehreren Transaktionen, auszuführen.

## Revendications

1. Un procédé de récupération d'une base de données, le procédé comprenant les opérations suivantes :
après que la base de données soit devenue indisponible, l'extraction (652), au moyen d'un processeur, d'un marqueur de dernière modification à partir d'une base de données de sauvegarde,
la copie (658), au moyen du processeur, de journaux de transaction à partir d'une pluralité de serveurs d'applications,
la création (660), au moyen du processeur, d'une base de données de journaux de transaction contenant les journaux de transaction copiés, où chaque transaction de la base de données de journaux de transaction contenant les journaux de transaction copiés comprend des données entrées, des données traitées, un timbre à date correspondant à une heure de journal de transactions et un marqueur de modification qui reflète un ordre des transactions des journaux de transaction copiés,
l'identification (662) au moyen d'un module de tri et de filtrage, d'une ou de plusieurs transactions dans la base de données de journaux de transaction contenant les journaux de transaction copiés qui possèdent des marqueurs de modification qui suivent le marqueur de dernière modification,
l'exécution (668), au moyen d'un module de relecture, des une ou plusieurs transactions qui ont été identifiées, et
la génération (670) d'une base de données récupérée (268) contenant les une ou plusieurs transactions qui ont été exécutées.

2. Le procédé selon la Revendication 1 où les une ou plusieurs transactions sont associées à des classes d'opérations annotées avec un indicateur associé à une récupération.

3. Le procédé selon la Revendication 1 où la génération de la base de données récupérée (268) comprend :
la génération de la base de données récupérée en fonction d'une dernière bonne sauvegarde vers la base de données de sauvegarde.

4. Le procédé selon la Revendication 1 où les transactions des journaux de transaction copiés comprennent des transactions d'enregistrement de noms de domaine et des dates associées à chacune des transactions d'enregistrement de noms de domaine.

5. Le procédé selon la Revendication 1 comprenant en outre :
le filtrage des transactions dans la base de données de journaux de transaction contenant les journaux de transaction copiés de façon à rejeter des transactions possédant des marqueurs de modification qui suivent le marqueur de dernière modification.

6. Le procédé selon la Revendication 1 où l'exécution (668) des une ou plusieurs transactions comprend :
l'exécution des une ou plusieurs transactions dans un ordre séquentiel correspondant à un marqueur de modification respectivement associé à chacune des une ou plusieurs transactions.

7. Le procédé selon la Revendication 1 où l'entrée de journal de transactions comprend une date d'expiration associée à un nom de domaine.

8. Un système de récupération de base de données comprenant :
un module d'entrée/sortie (269),
un processeur couplé au module d'entrée/sortie,
une base de données de sauvegarde (263) couplée au processeur, où la base de données de sauvegarde comprend un marqueur de dernière modification,
où le système comprend en outre :
une base de données de journaux de transaction (266), où chaque transaction des journaux de transaction comprend des données entrées, des données traitées, un timbre à date correspondant à une heure de journal de transactions et un marqueur de modification qui reflète un ordre des transactions des un ou plusieurs journaux de transaction,
un module de tri et de filtrage (262) couplé à la base de données de journaux de transaction et conçu de façon à identifier une ou plusieurs transactions dans la base de données de journaux de transaction qui possèdent des marqueurs de modification qui suivent le marqueur de dernière modification,
un module de relecture conçu de façon à exécuter les une ou plusieurs transactions qui ont été identifiées,
et
une base de données récupérée (268) contenant les une ou plusieurs transactions qui ont été exécutées.

9. Le système selon la Revendication 8 où les transactions sont associées à des classes d'opérations annotées avec un indicateur associé à la récupération.

10. Le système selon la Revendication 8 où la base de données de récupération est générée en fonction d'une dernière bonne sauvegarde vers une base de données de sauvegarde.

11. Le système selon la Revendication 8 où les journaux de transaction sont copiés à partir d'une pluralité de serveurs d'applications.

12. Le système selon la Revendication 11 où les transactions des journaux de transaction comprennent des transactions d'enregistrement de noms de domaine et des dates associées à chacune des transactions d'enregistrement de noms de domaine.

13. Le système selon la Revendication 8 où le module de tri et de filtrage est conçu en outre de façon à filtrer les transactions des journaux de transaction et à rejeter des transactions possédant des marqueurs de modification qui suivent le marqueur de dernière modification.

14. Le système selon la Revendication 8 où, lorsque module de relecture est conçu de façon à exécuter les une ou plusieurs transactions qui ont été identifiées, le module de relecture est conçu en outre de façon à exécuter les une ou plusieurs transactions dans un ordre séquentiel correspondant à un marqueur de modification respectivement associé à chacune des une ou plusieurs transactions.
